# EUROPEAN PATENT APPLICATION

(11) **EP 4 593 488 A1**
(43) Date of publication of application: **30.07.2025**
(21) Application number: 23868657.0
(22) Date of filing: 22.09.2023
(51) Int. Cl.: H04W 72/04, H04L 5/14, H04W 72/231, H04L 27/26, H04W 72/232, H04W 72/54, H04L 5/00

(54) **METHOD AND DEVICE FOR ALLOCATING RADIO RESOURCES IN IN-BAND FULL DUPLEX COMMUNICATION**

(30) Priority: 22.09.2022 KR 20220120312; 20.01.2023 KR 20230008676; 02.05.2023 KR 20230056906
(71) Applicant: Electronics and Telecommunications Research Institute, Daejeon 34129 (KR)
(72) Inventor: MOON, Sung Hyun, Daejeon 34129 (KR); KIM, Cheul Soon, Daejeon 34129 (KR); NOH, Hoon Dong, Daejeon 34129 (KR); LEE, Jung Hoon, Daejeon 34129 (KR)
(74) Representative: Betten & Resch
(86) International application number: PCT/KR2023/014519
(87) International publication number: WO 2024/063605

(57) **Abstract**

A method and a device for allocating radio resources in in-band full duplex communication are disclosed. The method of a terminal comprises the steps of: receiving slot format information from a base station; confirming a DL section, an FL section, and an UL section on the basis of the slot format information; receiving UL subband information from the base station; and regarding a DL resource area as an UL resource area if an UL subband indicated by the UL subband information overlaps the DL resource area in the DL section.

## Description

### [Technical Field]

The present disclosure relates to a signal transmission and reception technique in a communication system, and more particularly, to a technique for radio resource allocation and scheduling in in-band full duplex communication.

### [Background Art]

After the commercialization of fifth generation (5G) communications, innovation and economic achievement using 5G technologies are expected across industries. The 5G communication system (e.g., new radio (NR) communication system) supports more diverse services and scenarios than the conventional communication systems. To support a variety of services and scenarios, the 5G communication system has adopted advanced technologies, and available frequency bands of the 5G communication system has been expanded to a millimeter wave band. Usage scenarios of the 5G communication system include enhanced Mobile BroadBand (eMBB), Ultra Reliable Low Latency Communication (URLLC), and massive Machine Type Communication (mMTC). In addition to the above scenarios, functions specialized for various vertical industries are continuously being introduced into the 5G communication system, and the functions and technologies of the 5G communication system are evolving.

Meanwhile, the NR time-division duplex (TDD) system can still only support half-duplex communication, and accordingly, technical limitations may exist. The in-band full-duplex communication may be a key technology for improving spectral efficiency and extending uplink coverage. Efforts are needed to apply the in-band full-duplex communication in the 5G communication system and a new communication system (e.g., 6G communication system) after the 5G communication system.

### [Disclosure]

### [Technical Problem]

The present disclosure is directed to providing a method and an apparatus for radio resource allocation and scheduling in in-band full duplex communication.

### [Technical Solution]

A method of a terminal, according to exemplary embodiments of the present disclosure for achieving the above-described objective, may comprise: receiving slot format information from a base station; identifying a downlink (DL) period, a flexible (FL) period, and an uplink (UL) period based on the slot format information; receiving UL subband information from the base station; and in response to that a UL subband indicated by the UL subband information overlaps with a DL resource region within the DL period, considering the DL resource region as a UL resource region, wherein a period in which the DL resource region overlapping with the UL subband exists is a subband full duplex (SBFD) period, and a period in which the DL resource region overlapping with the UL subband does not exist is a non-SBFD period.

When the UL subband overlaps with an FL resource region within the FL period, the FL resource region may be considered as a UL resource region, and the SBFD period may include a period in which the DL resource region overlapping with the UL subband exists and a period in which the FL resource region overlapping with the UL subband exists.

A transmission direction based on the UL subband information may be a higher priority than a transmission direction based on the slot format information, and the transmission direction may be at least one of DL, FL, or UL.

The UL subband information may include time resource information and frequency resource information, the frequency resource information may indicate a resource block (RB) set, and the RB set may include one or more RBs.

The method may further comprise: receiving, from the base station, configuration information of a first physical downlink control channel (PDCCH) resource set associated with the non-SBFD period and configuration information of a second PDCCH resource set associated with the SBFD period; performing a first monitoring operation on the first PDCCH resource set within the non-SBFD period; and performing a second monitoring operation on the second PDCCH resource set within the SBFD period, wherein each of the first PDCCH resource set and the second PDCCH resource set includes one or more search space sets.

A PDCCH resource set monitored by the terminal may be switched from the first PDCCH resource set to the second PDCCH resource set at a time of transition from the non-SBFD period to the SBFD period.

Each of the non-SBFD period and the SBFD period may be configured on a slot basis or a symbol basis, and a switching operation of the PDCCH resource set may be performed on a slot basis.

The method may further comprise: receiving, from the base station, configuration information of a first PDCCH resource set associated with the non-SBFD period and configuration information of a second PDCCH resource set associated with the SBFD period; performing a first monitoring operation on one PDCCH resource set determined according to a predefined criterion among the first PDCCH resource set and the second PDCCH resource set in a slot n including the non-SBFD period and the SBFD period; and performing a second monitoring operation on the first PDCCH resource set in a slot n+1 including only the non-SBFD period, wherein n is a natural number.

When the SBFD period includes M or more symbols in the slot n, the one PDCCH resource set may be determined in the slot n as the second PDCCH resource set, and M is a natural number.

When a duration of a control resource set (CORESET) belonging to the second PDCCH resource set includes L symbols, M may be greater than or equal to L, and L is a natural number.

When non-SBFD period has a higher priority than the SBFD period, the one PDCCH resource set may be determined in the slot n as the first PDCCH resource set.

The method may further comprise: receiving, from the base station, configuration information of a CORESET, configuration information of a first frequency domain occasion associated with the CORESET, and configuration information of a second frequency domain occasion associated with the CORESET; performing a first monitoring operation on a first search space set formed based on the first frequency domain occasion in the non-SBFD period; and performing a second monitoring operation on a second search space set formed based on the second frequency domain occasion in the SBFD period.

A method of a base station, according to exemplary embodiments of the present disclosure for achieving the above-described objective, may comprise: transmitting, to a terminal, slot format information indicating a downlink (DL) period, a flexible (FL) period, and an uplink (UL) period; transmitting UL subband information to the terminal; in response to that a UL subband indicated by the UL subband information overlaps with a DL resource region within the DL period, considering the DL resource region as a UL resource region; and performing communication with the terminal in a subband full duplex (SBFD) period which is a period in which the DL resource region overlapping with the UL subband exists and a non-SFBD period which is a period in which the DL resource region overlapping with the UL subband does not exist.

When the UL subband overlaps with an FL resource region within the FL period, the FL resource region may be considered as a UL resource region, and the SBFD period may include a period in which the DL resource region overlapping with the UL subband exists and a period in which the FL resource region overlapping with the UL subband exists.

The method may further comprise: transmitting, to the terminal, configuration information of a first physical downlink control channel (PDCCH) resource set associated with the non-SBFD period and configuration information of a second PDCCH resource set associated with the SBFD period; and transmitting control information to the terminal in at least one of the first PDCCH resource set or the second PDCCH resource set, wherein a first monitoring operation on the first PDCCH resource set is performed within the non-SBFD period, a second monitoring operation on the second PDCCH resource set is performed within the SBFD period, and each of the first PDCCH resource set and the second PDCCH resource set includes one or more search space sets.

The method may further comprise: transmitting, to the terminal, configuration information of a first PDCCH resource set associated with the non-SBFD period and configuration information of a second PDCCH resource set associated with the SBFD period; and transmitting, to the terminal, control information in one PDCCH resource set determined according to a predefined criterion among the first PDCCH resource set and the second PDCCH resource set in a slot n including the non-SBFD period and the SBFD period, wherein n is a natural number.

The method may further comprise: transmitting, to the terminal, configuration information of a control resource set (CORESET), configuration information of a first frequency domain occasion associated with the CORESET, and configuration information of a second frequency domain occasion associated with the CORESET; and transmitting, to the terminal, control information in at least one of a first search space set formed based on the first frequency domain occasion in the non-SBFD period or a second search space set formed based on the second frequency domain occasion in the SBFD period.

A terminal according to exemplary embodiments of the present disclosure for achieving the above-described objective may comprise: at least one processor, and the at least one processor may cause the terminal to perform: receiving slot format information from a base station; identifying a downlink (DL) period, a flexible (FL) period, and an uplink (UL) period based on the slot format information; receiving UL subband information from the base station; and in response to that a UL subband indicated by the UL subband information overlaps with a DL resource region within the DL period, considering the DL resource region as a UL resource region, wherein a period in which the DL resource region overlapping with the UL subband exists is a subband full duplex (SBFD) period, and a period in which the DL resource region overlapping with the UL subband does not exist is a non-SBFD period.

The at least one processor may further cause the terminal to perform: receiving, from the base station, configuration information of a first physical downlink control channel (PDCCH) resource set associated with the non-SBFD period and configuration information of a second PDCCH resource set associated with the SBFD period; performing a first monitoring operation on the first PDCCH resource set within the non-SBFD period; and performing a second monitoring operation on the second PDCCH resource set within the SBFD period, wherein each of the first PDCCH resource set and the second PDCCH resource set includes one or more search space sets.

The at least one processor may further cause the terminal to perform: receiving, from the base station, configuration information of a first PDCCH resource set associated with the non-SBFD period and configuration information of a second PDCCH resource set associated with the SBFD period; performing a first monitoring operation on one PDCCH resource set determined according to a predefined criterion among the first PDCCH resource set and the second PDCCH resource set in a slot n including the non-SBFD period and the SBFD period; and performing a second monitoring operation on the first PDCCH resource set in a slot n+1 including only the non-SBFD period, wherein n is a natural number.

### [Advantageous Effects]

According to the present disclosure, the base station may transmit slot format information and UL subband information to the terminal. The terminal can identify a subband full duplex (SBFD) period and a non-SBFD period based on the slot format information and UL subband information. The terminal may perform a monitoring operation for reception of downlink control information (DCI) based on predefined criteria in each of the SBFD period and the non-SBFD period. Accordingly, communication can be performed efficiently in the SBFD period and non-SBFD period.

### [Description of Drawings]

FIG. 1 is a conceptual diagram illustrating a first exemplary embodiment of a communication system.
FIG. 2 is a block diagram illustrating a first exemplary embodiment of an apparatus.
FIG. 3 is a conceptual diagram illustrating a first exemplary embodiment of an in-band full-duplex communication method.
FIG. 4 is a conceptual diagram illustrating a first exemplary embodiment of a method for multiplexing uplink signals and downlink signals in full-duplex communication.
FIG. 5 is a conceptual diagram illustrating a first exemplary embodiment of a method for configuring resources in an SBFD period.
FIG. 6 is a conceptual diagram illustrating a second exemplary embodiment of a method for configuring resources in an SBFD period.
FIG. 7 is a conceptual diagram illustrating a third exemplary embodiment of a method for configuring resources in an SBFD period.
FIG. 8A is a conceptual diagram illustrating a first exemplary embodiment of a method of arranging a guard period between a downlink period and an SBFD period.
FIG. 8B is a conceptual diagram illustrating a second exemplary embodiment of a method of arranging a guard period between a downlink period and an SBFD period.
FIG. 9 is a conceptual diagram illustrating a first exemplary embodiment of slot format configuration and PDCCH monitoring resource configuration.
FIG. 10 is a conceptual diagram illustrating a first exemplary embodiment of a PDCCH resource set switching method based on a slot format.
FIG. 11 is a conceptual diagram illustrating a second exemplary embodiment of a PDCCH resource set switching method based on a slot format.
FIG. 12 is a conceptual diagram illustrating a third exemplary embodiment of a PDCCH resource set switching method based on a slot format.
FIG. 13A is a conceptual diagram illustrating a first exemplary embodiment of a method for arranging frequency domain occasions associated with a CORESET.
FIG. 13B is a conceptual diagram illustrating a second exemplary embodiment of a method for arranging frequency domain occasions associated with a CORESET.
FIG. 14 is a conceptual diagram illustrating a first exemplary embodiment of a PUCCH resource set switching method based on a slot format.

### [Mode for Invention]

Exemplary embodiments of the present disclosure are disclosed herein. However, specific structural and functional details disclosed herein are merely representative for purposes of describing embodiments of the present disclosure. Thus, embodiments of the present disclosure may be embodied in many alternate forms and should not be construed as limited to embodiments of the present disclosure set forth herein.

Accordingly, while the present disclosure is capable of various modifications and alternative forms, specific embodiments thereof are shown by way of example in the drawings and will herein be described in detail. It should be understood, however, that there is no intent to limit the present disclosure to the particular forms disclosed, but on the contrary, the present disclosure is to cover all modifications, equivalents, and alternatives falling within the spirit and scope of the present disclosure. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e., "between" versus "directly between," "adjacent" versus "directly adjacent," etc.).

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, exemplary embodiments of the present disclosure will be described in greater detail with reference to the accompanying drawings. In order to facilitate general understanding in describing the present disclosure, the same components in the drawings are denoted with the same reference signs, and repeated description thereof will be omitted.

A communication system to which exemplary embodiments according to the present disclosure are applied will be described. The communication system may be the 4G communication system (e.g., Long-Term Evolution (LTE) communication system or LTE-A communication system), the 5G communication system (e.g., New Radio (NR) communication system), the sixth generation (6G) communication system, or the like. The 4G communication system may support communications in a frequency band of 6 GHz or below, and the 5G communication system may support communications in a frequency band of 6 GHz or above as well as the frequency band of 6 GHz or below. The communication system to which the exemplary embodiments according to the present disclosure are applied is not limited to the contents described below, and the exemplary embodiments according to the present disclosure may be applied to various communication systems. Here, the communication system may be used in the same sense as a communication network, 'LTE' may refer to '4G communication system', 'LTE communication system', or 'LTE-A communication system', and 'NR' may refer to '5G communication system' or 'NR communication system'.

In exemplary embodiments, 'configuration of an operation (e.g., transmission operation)' may mean 'signaling of configuration information (e.g., information element(s), parameter(s)) for the operation' and/or 'signaling of information indicating performing of the operation'. In other words, 'an operation (e.g., transmission operation) being configured in a communication node' may mean that the communication node receives 'configuration information (e.g., information element, parameter) for the operation' and/or 'information indicating to perform the operation'. 'An information element (e.g., parameter) being configured in a communication node' may mean that the information element is signaled to the communication node (e.g., the communication node receives the information element)'. Signaling may be at least one of system information (SI) signaling (e.g., transmission of a system information block (SIB) and/or master information block (MIB)), RRC signaling (e.g., transmission of RRC parameters and/or higher layer parameters), MAC control element (CE) signaling, or PHY signaling (e.g., transmission of downlink control information (DCI), uplink control information (UCI), and/or sidelink control information (SCI)).

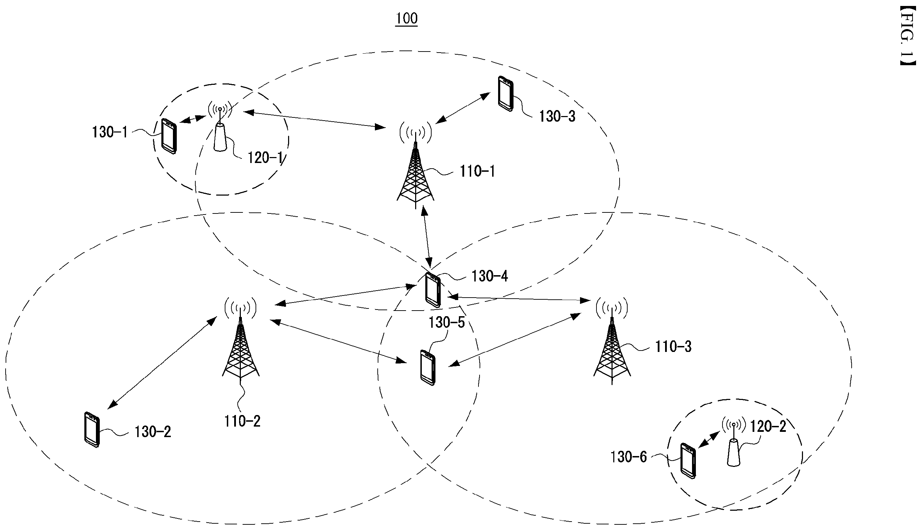

FIG. 1 is a conceptual diagram illustrating a first exemplary embodiment of a communication system.

Referring to FIG. 1, a communication system 100 may comprise a plurality of communication nodes 110-1, 110-2, 110-3, 120-1, 120-2, 130-1, 130-2, 130-3, 130-4, 130-5, and 130-6. Also, the communication system 100 may further comprise a core network (e.g., a serving gateway (S-GW), a packet data network (PDN) gateway (P-GW), and a mobility management entity (MME)). When the communication system 100 is a 5G communication system (e.g., New Radio (NR) system), the core network may include an access and mobility management function (AMF), a user plane function (UPF), a session management function (SMF), and the like.

The plurality of communication nodes 110 to 130 may support communication protocols defined in the 3rd generation partnership project (3GPP) technical specifications (e.g., LTE communication protocol, LTE-A communication protocol, NR communication protocol, or the like). The plurality of communication nodes 110 to 130 may support code division multiple access (CDMA) based communication protocol, wideband CDMA (WCDMA) based communication protocol, time division multiple access (TDMA) based communication protocol, frequency division multiple access (FDMA) based communication protocol, orthogonal frequency division multiplexing (OFDM) based communication protocol, filtered OFDM based communication protocol, cyclic prefix OFDM (CP-OFDM) based communication protocol, discrete Fourier transform-spread-OFDM (DFT-s-OFDM) based communication protocol, orthogonal frequency division multiple access (OFDMA) based communication protocol, single carrier FDMA (SC-FDMA) based communication protocol, non-orthogonal multiple access (NOMA) based communication protocol, generalized frequency division multiplexing (GFDM) based communication protocol, filter band multi-carrier (FBMC) based communication protocol, universal filtered multi-carrier (UFMC) based communication protocol, space division multiple access (SDMA) based communication protocol, or the like. Each of the plurality of communication nodes may mean an apparatus or a device. Exemplary embodiments may be performed by an apparatus or device. A structure of the apparatus (or, device) may be as follows.

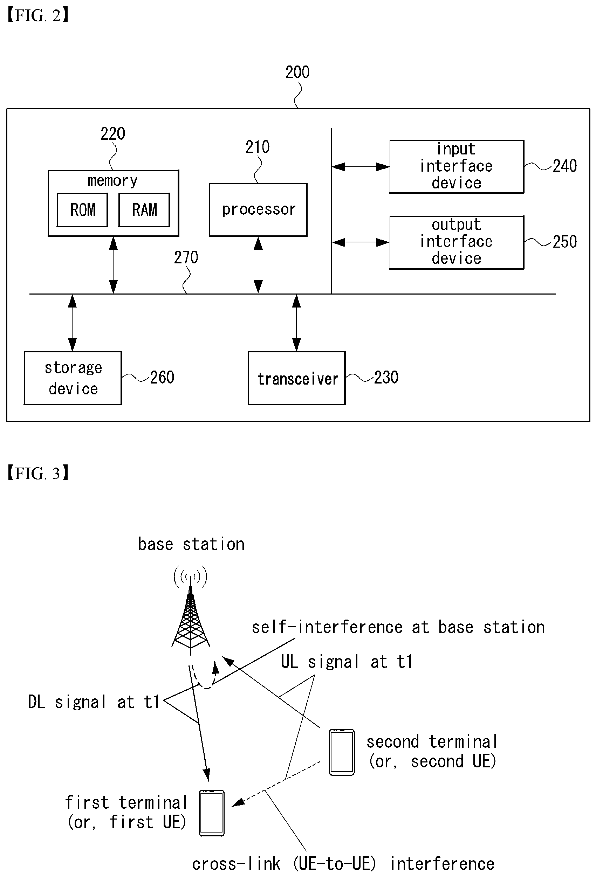

FIG. 2 is a block diagram illustrating a first exemplary embodiment of an apparatus.

Referring to FIG. 2, an apparatus 200 may comprise at least one processor 210, a memory 220, and a transceiver 230 connected to the network for performing communications. Also, the apparatus 200 may further comprise an input interface device 240, an output interface device 250, a storage device 260, and the like. The respective components included in the apparatus 200 may communicate with each other as connected through a bus 270.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to the cell coverage of the first base station 110-1. Also, the second terminal 130-2, the fourth terminal 130-4, and the fifth terminal 130-5 may belong to the cell coverage of the second base station 110-2. Also, the fifth base station 120-2, the fourth terminal 130-4, the fifth terminal 130-5, and the sixth terminal 130-6 may belong to the cell coverage of the third base station 110-3. Also, the first terminal 130-1 may belong to the cell coverage of the fourth base station 120-1, and the sixth terminal 130-6 may belong to the cell coverage of the fifth base station 120-2.

Here, each of the plurality of base stations 110-1, 110-2, 110-3, 120-1, and 120-2 may be referred to as NodeB (NB), evolved NodeB (eNB), gNB, advanced base station (ABS), high reliability-base station (HR-BS), base transceiver station (BTS), radio base station, radio transceiver, access point (AP), access node, radio access station (RAS), mobile multihop relay-base station (MMR-BS), relay station (RS), advanced relay station (ARS), high reliability-relay station (HR-RS), home NodeB (HNB), home eNodeB (HeNB), road side unit (RSU), radio remote head (RRH), transmission point (TP), transmission and reception point (TRP), or the like.

Each of the plurality of terminals 130-1, 130-2, 130-3, 130-4, 130-5, and 130-6 may be referred to as user equipment (UE), terminal equipment (TE), advanced mobile station (AMS), high reliability-mobile station (HR-MS), terminal, access terminal, mobile terminal, station, subscriber station, mobile station, portable subscriber station, node, device, on-board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul link or a non-ideal backhaul link, and exchange information with each other via the ideal or non-ideal backhaul. Also, each of the plurality of base stations 110-1, 110-2, 110-3, 120-1, and 120-2 may be connected to the core network through the ideal backhaul link or non-ideal backhaul link. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support a multi-input multi-output (MIMO) transmission (e.g., singleuser MIMO (SU-MIMO), multi-user MIMO (MU-MIMO), massive MIMO, or the like), a coordinated multipoint (CoMP) transmission, a carrier aggregation (CA) transmission, a transmission in unlicensed band, a device-to-device (D2D) communication (or, proximity services (ProSe)), an Internet of Things (IoT) communication, a dual connectivity (DC), or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2 (i.e., the operations supported by the plurality of base stations 110-1, 110-2, 110-3, 120-1, and 120-2). For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

Each of the first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control D2D communications between the fourth terminal 130-4 and the fifth terminal 130-5, and thus the fourth terminal 130-4 and the fifth terminal 130-5 may perform the D2D communications under control of the second base station 110-2 and the third base station 110-3.

The present disclosure may relate to a technology for transmitting and receiving signals in a communication system. In in-band full duplex communication, the base station may allocate uplink resources and downlink resources to the terminal and perform scheduling on the allocated resources. Exemplary embodiments of the present disclosure may be applied to various other communication systems (e.g., LTE communication system, 5G communication system, sixth generation (6G) communication system, etc.) in addition to the NR communication system.

A numerology applied to physical signals and channels in the communication system (e.g., NR communication system or 6G communication system) may be variable. The numerology may vary to satisfy various technical requirements of the communication system. In the communication system to which a cyclic prefix (CP) based OFDM waveform technology is applied, the numerology may include a subcarrier spacing and a CP length (or CP type). Table 1 below may be a first exemplary embodiment of configuration of numerologies for the CP-based OFDM. The subcarrier spacings may have an exponential multiplication relationship of 2, and the CP length may be scaled at the same ratio as the OFDM symbol length. Depending on a frequency band in which the communication system operates, at least some numerologies among the numerologies of Table 1 may be supported. In addition, in the communication system, numerologies not listed in Table 1 may be further supported. CP type(s) not listed in Table 1 (e.g., extended CP) may be additionally supported for a specific subcarrier spacing (e.g., 60 kHz).

Table 1 relates to a first exemplary embodiment of a method for configuring numerologies for a CP-OFDM based communication system.

**[Table 1]**

| Subcarrier spacing | 15kHz | 30kHz | 60kHz | 120kHz | 240kHz | 480kHz |
|---|---|---|---|---|---|---|
| OFDM symbol length [µs] | 66.7 | 33.3 | 16.7 | 8.3 | 4.2 | 2.1 |
| CP length [µs] | 4.76 | 2.38 | 1.19 | 0.60 | 0.30 | 0.15 |
| Number of OFDM symbols within 1ms | 14 | 28 | 56 | 112 | 224 | 448 |

In the following description, a frame structure in the communication system will be described. In the time domain, elements constituting a frame structure may include a subframe, slot, mini-slot, symbol, and the like. The subframe may be used as a unit for transmission, measurement, and the like, and the length of the subframe may have a fixed value (e.g., 1 ms) regardless of a subcarrier spacing. A slot may comprise consecutive symbols (e.g., 14 OFDM symbols). The length of the slot may be variable differently from the length of the subframe. For example, the length of the slot may be inversely proportional to the subcarrier spacing.

A slot may be used as a unit for transmission, measurement, scheduling, resource configuration, timing (e.g., scheduling timing, hybrid automatic repeat request (HARQ) timing, channel state information (CSI) measurement and reporting timing, etc.), and the like. The length of an actual time resource used for transmission, measurement, scheduling, resource configuration, etc. may not match the length of a slot. A mini-slot may include consecutive symbol(s), and the length of a mini-slot may be shorter than the length of a slot. A mini-slot may be used as a unit for transmission, measurement, scheduling, resource configuration, timing, and the like. A mini-slot (e.g., the length of a mini-slot, a mini-slot boundary, etc.) may be predefined in the technical specification. Alternatively, a mini-slot (e.g., the length of a mini-slot, a mini-slot boundary, etc.) may be configured (or indicated) to the terminal. When a specific condition is satisfied, use of a mini-slot may be configured (or indicated) to the terminal.

The base station may schedule a data channel (e.g., physical downlink shared channel (PDSCH), physical uplink shared channel (PUSCH), physical sidelink shared channel (PSSCH)) using some or all of symbols constituting a slot. In particular, for URLLC transmission, unlicensed band transmission, transmission in a situation where an NR communication system and an LTE communication system coexist, and multi-user scheduling based on analog beamforming, a data channel may be transmitted using a portion of a slot. In addition, the base station may schedule a data channel using a plurality of slots. In addition, the base station may schedule a data channel using at least one mini-slot.

In the frequency domain, elements constituting the frame structure may include a resource block (RB), subcarrier, and the like. One RB may include consecutive subcarriers (e.g., 12 subcarriers). The number of subcarriers constituting one RB may be constant regardless of a numerology. In this case, a bandwidth occupied by one RB may be proportional to a subcarrier spacing of a numerology. An RB may be used as a transmission and resource allocation unit for a data channel, control channel, and the like. Resource allocation of a data channel may be performed in units of RBs or RB groups (e.g., resource block group (RBG)). One RBG may include one or more consecutive RBs. Resource allocation of a control channel may be performed in units of control channel elements (CCEs). One CCE in the frequency domain may include one or more RBs.

In the communication system, a slot (e.g., slot format) may be composed of a combination of one or more of downlink period, flexible period (or unknown period), and an uplink period. Each of a downlink period, flexible period, and uplink period may be comprised of one or more consecutive symbols. A flexible period may be located between a downlink period and an uplink period, between a first downlink period and a second downlink period, or between a first uplink period and a second uplink period. When a flexible period is inserted between a downlink period and an uplink period, the flexible period may be used as a guard period.

A slot may include one or more flexible periods. Alternatively, a slot may not include a flexible period. The terminal may perform a predefined operation in a flexible period. Alternatively, the terminal may perform an operation configured by the base station semi-statically or periodically. For example, the periodic operation configured by the base station may include a PDCCH monitoring operation, synchronization signal/physical broadcast channel (SS/PBCH) block reception and measurement operation, channel state information-reference signal (CSI-RS) reception and measurement operation, downlink semi-persistent scheduling (SPS) PDSCH reception operation, sounding reference signal (SRS) transmission operation, physical random access channel (PRACH) transmission operation, periodicallyconfigured PUCCH transmission operation, PUSCH transmission operation according to a configured grant, and the like. A flexible symbol may be overridden by a downlink symbol or an uplink symbol. When a flexible symbol is overridden by a downlink or uplink symbol, the terminal may perform a new operation instead of the existing operation in the corresponding flexible symbol (e.g., overridden flexible symbol).

A slot format may be configured semi-statically by higher layer signaling (e.g., radio resource control (RRC) signaling). Information indicating a semi-static slot format may be included in system information, and the semi-static slot format may be configured in a cell-specific manner. In addition, a semi-static slot format may be additionally configured for each terminal through terminal-specific higher layer signaling (e.g., RRC signaling). A flexible symbol of a slot format configured cellspecifically may be overridden by a downlink symbol or an uplink symbol by terminal-specific higher layer signaling. In addition, a slot format may be dynamically indicated by physical layer signaling (e.g., slot format indicator (SFI) included in downlink control information (DCI)). The semi-statically configured slot format may be overridden by a dynamically indicated slot format. For example, a semi-static flexible symbol may be overridden by a downlink symbol or an uplink symbol by SFI.

The base station and the terminal may perform downlink operations, uplink operations, and sidelink operations in a bandwidth part. A bandwidth part may be defined as a set of consecutive RBs (e.g., physical resource blocks (PRBs)) having a specific numerology in the frequency domain. RBs constituting one bandwidth part may be consecutive in the frequency domain. One numerology may be used for transmission of signals (e.g., transmission of control channel or data channel) in one bandwidth part. In exemplary embodiments, when used in a broad sense, a 'signal' may refer to any physical signal and channel. A terminal performing an initial access procedure may obtain configuration information of an initial bandwidth part from the base station through system information. A terminal operating in an RRC connected state may obtain the configuration information of the bandwidth part from the base station through terminal-specific higher layer signaling.

The configuration information of the bandwidth part may include a numerology (e.g., a subcarrier spacing and a CP length) applied to the bandwidth part. Also, the configuration information of the bandwidth part may further include information indicating a position of a start RB (e.g., start PRB) of the bandwidth part and information indicating the number of RBs (e.g., PRBs) constituting the bandwidth part. At least one bandwidth part among the bandwidth part(s) configured in the terminal may be activated. For example, within one carrier, one uplink bandwidth part and one downlink bandwidth part may be activated respectively. In a time division duplex (TDD) based communication system, a pair of an uplink bandwidth part and a downlink bandwidth part may be activated. The base station may configure a plurality of bandwidth parts to the terminal within one carrier, and may switch the active bandwidth part of the terminal.

In exemplary embodiments, an RB may mean a common RB (CRB). Alternatively, an RB may mean a PRB or a virtual RB (VRB). In the NR communication system, a CRB may refer to an RB constituting a set of consecutive RBs (e.g., common RB grid) based on a reference frequency (e.g., point A). Carriers, bandwidth part, and the like may be arranged on the common RB grid. That is, a carrier, bandwidth part, etc. may be composed of CRB(s). An RB or CRB constituting a bandwidth part may be referred to as a PRB, and a CRB index within the bandwidth part may be appropriately converted into a PRB index. In an exemplary embodiment, an RB may refer to an interlace RB (IRB).

A minimum resource unit constituting a PDCCH may be a resource element group (REG). An REG may be composed of one PRB (e.g., 12 subcarriers) in the frequency domain and one OFDM symbol in the time domain. Thus, one REG may include 12 resource elements (REs). A demodulation reference signal (DMRS) for demodulating a PDCCH may be mapped to 3 REs among 12 REs constituting the REG, and control information (e.g., modulated DCI) may be mapped to the remaining 9 REs.

One PDCCH candidate may be composed of one CCE or aggregated CCEs. One CCE may be composed of a plurality of REGs. The NR communication system may support CCE aggregation levels 1, 2, 4, 8, 16, and the like, and one CCE may consist of six REGs.

A control resource set (CORESET) may be a resource region in which the terminal performs a blind decoding on PDCCHs. The CORESET may be composed of a plurality of REGs. The CORESET may consist of one or more PRBs in the frequency domain and one or more symbols (e.g., OFDM symbols) in the time domain. The symbols constituting one CORESET may be consecutive in the time domain. The PRBs constituting one CORESET may be consecutive or non-consecutive in the frequency domain. One DCI (e.g., one PDCCH) may be transmitted within one CORESET. A plurality of CORESETs may be configured with respect to a cell and a terminal, and the plurality of CORESETs may overlap in time-frequency resources.

A CORESET may be configured in the terminal by a PBCH (e.g., system information or a master information block (MIB) transmitted on the PBCH). The identifier (ID) of the CORESET configured by the PBCH may be 0. That is, the CORESET configured by the PBCH may be referred to as a CORESET #0. A terminal operating in an RRC idle state may perform a monitoring operation in the CORESET #0 in order to receive a first PDCCH in the initial access procedure. Not only terminals operating in the RRC idle state but also terminals operating in the RRC connected state may perform monitoring operations in the CORESET #0. The CORESET may be configured in the terminal by other system information (e.g., system information block type 1 (SIB1)) other than the system information transmitted through the PBCH. For example, for reception of a random access response (or Msg2) in a random access procedure, the terminal may receive the SIB1 including the configuration information of the CORESET. Also, the CORESET may be configured in the terminal by terminal-specific higher layer signaling (e.g., RRC signaling).

In each downlink bandwidth part, one or more CORESETs may be configured for the terminal. The terminal may monitor PDCCH candidate(s) for the CORESET configured in the downlink active bandwidth part. Alternatively, the terminal may monitor PDCCH candidate(s) for a CORESET (e.g., CORESET #0) configured in a downlink bandwidth part other than the downlink active bandwidth part. The initial downlink active bandwidth part may include the CORESET #0 and may be associated with the CORESET #0. The CORESET #0 having a quasi-co-location (QCL) relation with an SS/PBCH block may be configured for the terminal in a primary cell (PCell), a secondary cell (SCell), and a primary secondary cell (PSCell). In the secondary cell (SCell), the CORESET #0 may not be configured for the terminal.

A search space may be a set of PDCCH candidate(s) or a set of resource regions occupied by the PDCCH candidate(s). The terminal may perform a blind decoding on each of the PDCCH candidates within a predefined search space. The terminal may determine whether a PDCCH is transmitted to itself by performing a cyclic redundancy check (CRC) on a result of the blind decoding. When it is determined that a PDCCH is a PDCCH for the terminal itself, the terminal may receive the PDCCH. The terminal may periodically monitor the search space, and may monitor the search space at one or more time positions (e.g., PDCCH monitoring occasions, CORESET) within one period.

A PDCCH candidate may be configured with CCEs selected by a predefined hash function within an occasion of the CORESET or the search space. The search space may be defined and configured for each CCE aggregation level. In this case, a set of search spaces for all CCE aggregation levels may be referred to as a 'search space set'. In exemplary embodiments, 'search space' may mean 'search space set', and 'search space set' may mean 'search space'.

A search space set may be logically associated with or correspond to one CORESET. One CORESET may be logically associated with or correspond to one or more search space sets. A search space set for transmitting a common DCI or a group common DCI may be referred to as a common search space set (hereinafter, referred to as a 'CSS set'). The common DCI or the group common DCI may include at least one of resource allocation information of a PDSCH for transmission of system information, paging, a power control command, SFI, or a preemption indicator. In the case of the NR communication system, the common DCI may correspond to DCI formats 0_0, 1_0, etc., and a cyclic redundancy check (CRC) of the common DCI may be scrambled by a system information-radio network temporary identifier (SI-RNTI), paging-RNTI (P-RNTI), random access-RNTI (RA-RNTI), temporary cell-RNTI (TC-RNTI), or the like. The group common DCI may correspond to a DCI format 2_X (X=0, 1, 2, ...), or the like, and a CRC of the group common DCI may be scrambled by a slot format indicator-RNTI (SFI-RNTI) or the like. The CSS set may include Type 0, Type 0A, Type 1, Type 2, and Type 3 CSS sets.

A search space set for transmitting a UE-specific DCI may be referred to as a UE-specific search space set (hereinafter, referred to as a 'USS set'). The UE-specific DCI may include scheduling and resource allocation information for a PDSCH, PUSCH, PSSCH, or the like. In the case of the NR communication system, the UE-specific DCI may correspond to DCI formats 0_1, 0_2, 1_1, 1_2, 3_0, 3_1, or the like, and a CRC of the UE-specific DCI may be scrambled by a C-RNTI, configured scheduling-RNTI (CS-RNTI), modulation and coding scheme-C-RNTI (MCS-C-RNTI), or the like. The UE-specific DCI including the scrambled CRC may be transmitted. In consideration of scheduling freedom or fallback transmission, a UE-specific DCI may be transmitted even in a CSS set. In this case, the UE-specific DCI may be transmitted according to the DCI format corresponding to the common DCI. For example, the terminal may monitor a PDCCH (e.g., DCI formats 0_0, 0_1) whose CRC is scrambled with a C-RNTI, CS-RNTI, MCS-C-RNTI, or the like in the CSS set.

The Type 0 CSS set may be used for receiving a DCI scheduling a PDSCH including an SIB1, and may be configured through a PBCH or cell-specific RRC signaling. The ID of the Type 0 CSS set may be assigned as or set to 0. The type 0 CSS set may be logically combined with the CORESET #0.

The terminal may assume that a PDCCH DM-RS has a QCL relationship with a certain signal (e.g., SS/PBCH block, CSI-RS, PDSCH DM-RS, PDCCH DM-RS, or the like). In addition, since a PDCCH has the same antenna port as a corresponding PDCCH DM-RS, the PDCCH and the PDCCH DM-RS may have a QCL relationship with each other. Therefore, the terminal may acquire information on large-scale propagation characteristics of a radio channel experienced by the PDCCH and the PDCCH DM-RS through the QCL assumption, and may utilize the information on the large-scale propagation characteristics for channel estimation, reception beamforming, and the like. A QCL parameter may include at least one of a delay spread, Doppler spread, Doppler shift, average gain, average delay, or spatial Rx parameter. The spatial Rx parameter may correspond to at least one characteristic of a reception beam, reception channel spatial correlation, or transmission/reception beam pair. For convenience, the spatial Rx parameter may be referred to as 'spatial QCL'. The PDCCH may be used in a sense including the PDCCH DM-RS, and an expression that the PDCCH has a QCL relationship with a certain signal may include the meaning that the PDCCH DM-RS of the PDCCH has a QCL relationship with the certain signal. A signal having a QCL relationship with the PDCCH or a resource thereof may be referred to as a QCL source, QCL source signal, QCL source resource, or the like.

PDCCHs transmitted in the same CORESET (and a search space set, PDCCH monitoring occasions, etc. corresponding thereto) may have the same QCL relationship. That is, a unit of a set for which the terminal assumes the same QCL may be a CORESET, and the QCL assumption for each of the CORESETs may be independent. In an exemplary embodiment, a QCL, QCL source, etc. of a certain CORESET may mean a QCL, QCL source, etc. of a PDCCH received through the corresponding CORESET, respectively. Exceptionally, different QCL assumptions may be applied to search space sets corresponding to one CORESET. For example, a search space set for monitoring an RA-RNTI (e.g., Type 1 CSS set) and other search space sets may have different QCL relationships.

A QCL relationship or QCL assumption (e.g., QCL source, QCL type, etc.) of a CORESET may be determined by a predefined method. For example, the terminal may assume that a PDCCH DM-RS received through a certain CORESET or a certain search space set has a QCL relationship, with respect to a predefined QCL type, with an SS/PBCH block and/or CSI-RS selected in an initial access or random access procedure. Here, the QCL type may mean a set of one or more QCL parameter(s). Alternatively, a QCL relationship or QCL assumption (e.g., QCL source, QCL type, etc.) of a CORESET may be signaled from the base station to the terminal (e.g., through RRC signaling, medium access control (MAC) control element (CE) signaling, DCI signaling, or a combination thereof). That is, the base station may configure a transmission configuration information (TCI) state for a CORESET to the terminal. In general, the TCI state may include an ID of a signal (e.g., a QCL source or QCL source resource of a PDCCH DM-RS) having a QCL relationship with a DM-RS (e.g., the PDCCH DM-RS) of a physical channel to which the TCI is applied, and/or at least one QCL type thereof. For example, the base station may configure one or more TCI state candidates for each CORESET to the terminal through RRC signaling, and may indicate or configure one TCI state to be used for CORESET monitoring of the terminal from among the one or more TCI state candidates to the terminal through MAC signaling (or DCI) signaling). When there is one TCI state candidate configured by RRC signaling, the MAC signaling procedure (or DCI signaling procedure) may be omitted. The terminal may perform PDCCH monitoring and reception operations for the corresponding CORESET based on the TCI state configuration information received from the base station.

Duplex communication between communication nodes (e.g., base station, terminal) may be performed based on a half-duplex scheme or a full-duplex scheme. According to the half-duplex scheme, a communication node can perform either a signal transmission operation or a signal reception operation at one time. In other words, the communication node cannot perform a transmission operation and a reception operation simultaneously. According to the full-duplex scheme, a communication node can perform a transmission operation and a reception operation simultaneously. Alternatively, the communication node may perform a transmission operation and a reception operation at different times.

Full-duplex communication may be easily performed in a frequency division duplex (FDD) system (e.g., system using an FDD carrier, paired spectrum, or the like). A communication node may perform transmission and reception operations in separate frequency regions (e.g., uplink carrier and downlink carrier). For example, the communication node may perform a transmission operation in a first frequency region and a reception operation in a second frequency region. Therefore, interference between a transmission signal and a reception signal may be very small. On the other hand, in a time division duplex (TDD) system (e.g., system using a TDD carrier, unpaired spectrum, or the like), communication nodes may perform a transmission operation and a reception operation within a common frequency region (e.g., carrier commonly used for uplink and downlink transmission), and when the transmission operation and the reception operation occur simultaneously, a transmission signal may act as interference to a reception signal. Therefore, self-interference cancellation techniques may be required to perform full-duplex communication in the TDD system. The full-duplex communication in the TDD system may be referred to as in-band full-duplex communication. Meanwhile, half-duplex communication may be easily performed in the FDD system and TDD system because there is no interference problem described above.

FIG. 3 is a conceptual diagram illustrating a first exemplary embodiment of an in-band full-duplex communication method.

Referring to FIG. 3, a base station may perform duplex communication with terminal(s) based on the full-duplex scheme. For example, the base station may perform a transmission operation and a reception operation simultaneously (e.g., at the same time). On the other hand, a terminal may perform either a transmission operation or a reception operation at one time. For example, the base station may transmit a downlink signal to a first terminal at a time t1 and receive an uplink signal from a second terminal at the time t1. In other words, the base station can simultaneously perform the transmission and reception operations at the time t1. The downlink signal and the uplink signal can be transmitted in the same band (e.g., within the same carrier). In this case, the downlink signal may act as self-interference to a reception procedure of the uplink signal at the base station. The base station may improve a reception performance of the uplink signal by cancelling or mitigating self-interference before detecting the uplink signal from a reception signal.

The uplink signal transmitted by the second terminal may act as interference to a reception procedure of the downlink signal at the first terminal. The interference between the uplink signal and the downlink signal (e.g., uplink and downlink signals transmitted from different communication nodes) may be referred to as cross-link interference. When a distance between the first terminal and the second terminal is close or when a transmission beam direction of the second terminal transmitting the uplink signal is similar to a direction of the first terminal, a strength of cross-link interference caused by the uplink signal of the second terminal on the downlink transmission may be large. Therefore, the reception performance of the downlink signal at the first terminal may be deteriorated. If the first terminal does not have a capability of cancelling cross-link interference, the reception performance of the downlink signal at the first terminal may be seriously deteriorated.

To solve the above-described cross-link interference problem between terminals, in the in-band full-duplex communication, uplink signals and downlink signals may be transmitted in different resource regions (e.g., time and/or frequency resource regions). For example, an uplink signal and a downlink signal transmitted in the same band (e.g., the same carrier) may be transmitted in different time resource regions. Alternatively, an uplink signal and a downlink signal transmitted in the same band (e.g., the same carrier) may be transmitted simultaneously (e.g., at the same time), and in this case, the uplink signal and the downlink signal may be transmitted in different frequency regions.

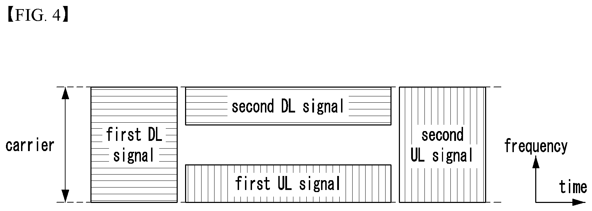

FIG. 4 is a conceptual diagram illustrating a first exemplary embodiment of a method for multiplexing uplink signals and downlink signals in full-duplex communication.

Referring to FIG. 4, within one serving cell (or carrier), uplink signals and downlink signals may be multiplexed and transmitted in different resources (e.g., time and/or frequency resources). For example, a first downlink signal, a second downlink signal (or a first uplink signal), and a second uplink signal may be transmitted in different time resources. In other words, the first downlink signal, the second downlink signal (or the first uplink signal), and the second uplink signal may be transmitted based on a time division multiplexing (TDM) scheme. For another example, the first uplink signal and the second downlink signal may be transmitted in the same time resource and different frequency resources. In other words, the first uplink signal and the second downlink signal may be transmitted based on a frequency division multiplexing (FDM) scheme. In the present disclosure, a downlink signal may be referred to as a DL signal, and an uplink signal may be referred to as a UL signal.

The base station may transmit and receive uplink signals and downlink signals. For example, the base station may transmit the second downlink signal to a terminal (e.g., first terminal) and simultaneously receive the first uplink signal from another terminal (e.g., second terminal). The second downlink signal may act as self-interference (e.g., cross-link interference) in a reception procedure of the first uplink signal at the base station. The first uplink signal may act as cross-link interference in a reception procedure of the second downlink signal at the first terminal. According to an exemplary embodiment of the present disclosure, a frequency region in which the first uplink signal is transmitted and a frequency region in which the second downlink signal is transmitted may be separated from each other, and when the frequency regions are sufficiently far apart, the above-described cross-link interference may be mitigated. In the exemplary embodiment of FIG. 4, the first terminal and the second terminal may each be the first terminal and the second terminal in the exemplary embodiment of FIG. 3. In the present disclosure, a time period in which simultaneous transmission of an uplink signal and a downlink signal is allowed may be referred to as a subband full duplex (SBFD) period.

In the present disclosure, method(s) for in-band full-duplex communication will be described. In the present disclosure, single carrier transmission will be mainly considered, but proposed methods are not limited to single carrier transmission and can be easily applied to transmission using carrier aggregation. In the present disclosure, unless otherwise stated, uplink transmission and downlink transmission may be transmitted in the same bandwidth part, or may be transmitted in different bandwidth parts (e.g., uplink bandwidth part and downlink bandwidth part). The bandwidth parts may be bandwidth parts configured for the same serving cell or the same carrier. When carrier aggregation is used, the bandwidth parts may belong to different carriers (or serving cells). In addition, although the TDD system will be mainly considered in the present disclosure, proposed methods can be easily applied to systems using other duplexing schemes (e.g., FDD system).

### [Method of configuring resource regions in an SBFD period]

Methods for a base station to configure resource regions for uplink transmission and downlink transmission in a terminal for full-duplex communication will be described. Here, uplink transmission may refer to transmission of uplink physical signal(s) and/or channel(s). The uplink physical signals and/or channels may include a PUSCH, PUCCH, DM-RS, SRS, PRACH, phase tracking-reference signal (PT-RS), and/or the like. Here, downlink transmission may refer to transmission of downlink physical signal(s) and/or channel(s). The downlink physical signals and/or channels may include a PDSCH, PDCCH, DM-RS, CSI-RS, tracking reference signal (TRS), PT-RS, positioning reference signal (PRS), synchronization signal (e.g., primary synchronization signal (PSS), secondary synchronization signal (SSS)), PBCH, synchronization signal block (SSB), SS/PBCH block, discovery signal, and/or the like.

According to an exemplary embodiment, an SBFD period may not be explicitly configured to the terminal, and in this case, simultaneous uplink/downlink transmission in the SBFD period may be performed by the base station appropriately allocating uplink signals and downlink signals in the frequency domain. For example, in the exemplary embodiment of FIG. 4, an SBFD period may be configured to the first terminal as a complete downlink period, and the first terminal may receive the second downlink signal in the downlink period. The SBFD period may be configured to the second terminal as a complete uplink period, and the second terminal may transmit the first uplink signal in the uplink period. According to the above-described method, full-duplex communication may be performed in the SBFD period. According to the above-described method, the second terminal cannot apply a transmission band-pass filter considering downlink reception at the first terminal, and cross-link interference between the terminals cannot be effectively controlled. To solve the above problem, a frequency gap between the uplink transmission and downlink transmission may be greatly increased, and in this case, spectral efficiency may be reduced.

Therefore, it may be preferable to explicitly configure the SBFD period to the terminal. 'Configuring a first time period as an SBFD period in a terminal' may mean 'transmitting configuration information for distinguishing between an uplink subband and a downlink subband in the first time period to the terminal'. Specific methods for configuring the SBFD period in the terminal will be described. In exemplary embodiments below, a case where at most one uplink subband is configured to the terminal will be mainly considered, but a plurality of uplink subbands may be configured to the terminal in the SBFD period using the same or similar method.

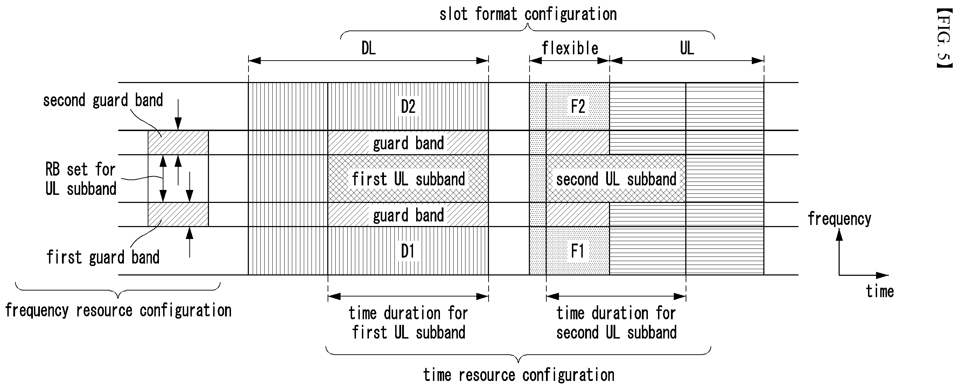

FIG. 5 is a conceptual diagram illustrating a first exemplary embodiment of a method for configuring resources in an SBFD period.

Referring to FIG. 5, a terminal may receive slot format configuration information (e.g., slot format configuration, slot format information) from a base station by the above-described method, and determine a downlink period, a flexible period, and/or an uplink period based on the slot format configuration information. Each of the downlink period, flexible period, and uplink period may be a set of consecutive symbol(s). In the present disclosure, a downlink period may be referred to as a DL period, a flexible period may be referred to as an FL period, and an uplink period may be referred to as a UL period.

The terminal may receive uplink subband configuration information (e.g., uplink subband configuration, uplink subband information) from the base station. The uplink subband configuration information may include time resource configuration information (e.g., time resource information) and/or frequency resource configuration information (e.g., frequency resource information). The terminal may determine a resource of uplink subband(s) based on the slot format information and/or the uplink subband information. If the resource (e.g., uplink resource) of the uplink subband overlap with a downlink resource and/or flexible resource according to the slot format configuration, the downlink resource and/or flexible resource may be overridden by the resource of the uplink subband, and the overridden resource may be considered as an uplink resource. In other words, if a transmission direction by the slot format configuration and a transmission direction by the uplink subband configuration conflict in the same resource, the transmission direction by the uplink subband configuration may have a higher priority than the transmission direction by the slot format configuration. The method applied in the above example may be referred to as (Method 100).

In (Method 100), a frequency resource of the uplink subband may correspond to an RB set. The RB set may be configured in a carrier bandwidth or a bandwidth part, and may include consecutive RBs (e.g., PRBs). Guard band(s) may be arranged at boundary(ies) of the RB set (e.g., lower frequency boundary and/or upper frequency boundary). The guard band may be configured in the carrier bandwidth or bandwidth part, and may include consecutive RB(s) (e.g., PRB(s)).

The base station may inform the terminal of a frequency location of the RB set (e.g., 'start RB and number of RBs' or 'start RB and end RB'), and the terminal may identify the frequency locations of the RB set and/or guard band(s) based on the information of the frequency location. Alternatively, the base station may inform the terminal of the frequency location(s) of the guard band(s) (e.g., 'start RB and number of RBs of each guard band' or 'start RB and end RB of each guard band'), and the terminal may identify the frequency locations of the RB set and/or guard band(s) based on the information of the frequency location(s). The terminal may regard the RB set as the frequency resource of the uplink subband. A certain guard band may be configured to include 0 RBs. In this case, the terminal may consider that the guard band does not exist.

A time period in which a guard band is valid may coincide with a duration (e.g., time duration) of an uplink subband to which the guard band corresponds. Alternatively, a guard band may be valid only for a portion (e.g., a period in which a transmission direction conflict occurs between subband configuration and slot format configuration, SBFD period, etc.) of a duration of an uplink subband to which the guard band corresponds. Basically, the terminal may not transmit signals in the guard band. The terminal may apply a subband filtering to an uplink signal based on the guard band(s) or a subband bandwidth (e.g., a bandwidth of the uplink subband) determined by the guard band(s), and transmit the filtered uplink signal. The terminal may not receive signals in the guard band.

A time resource (e.g., duration) of the uplink subband may correspond to a set of slot(s) and/or symbol(s). The terminal may receive information on a location (e.g., index) of the slot(s) and/or symbol(s) corresponding to the duration of the uplink subband from the base station. The terminal may consider a resource corresponding to an intersection of the durations of the RB set and the uplink subband as the uplink subband or uplink resource.

The time resource of the uplink subband may be arranged in the downlink period. Referring again to FIG. 5, a first uplink subband may be arranged in the downlink period. The entire duration of the first uplink subband may correspond to the SBFD period. According to the above-described prioritization rule, the terminal may regard the frequency resource of the first uplink subband as an uplink resource rather than a downlink resource during the duration of the first uplink subband. The terminal may regard the remaining frequency resource (e.g., the remaining frequency resource in the carrier or bandwidth part, D1 and D2) excluding the frequency resource of the first uplink subband (or the first uplink subband and guard band(s)) during the duration of the first uplink subband as a downlink resource. D1 and D2 may be referred to as downlink subbands. As a result, the SBFD period where the first uplink subband is arranged may have a subband pattern 'DUD'.

The time resource of the uplink subband may be arranged in the flexible period and/or the uplink period. Referring again to FIG. 5, the second uplink subband may be arranged in the flexible period and the uplink period. In this case, a portion of the duration of the second uplink subband (e.g., a period overlapping with the flexible period) may correspond to an SBFD period. According to the above-described prioritization rule, the terminal may regard the frequency resource of the second uplink subband as an uplink resource rather than a flexible resource during the SBFD period. During the SBFD period, the terminal may regard the remaining frequency resource (e.g., the remaining frequency resource in the carrier or bandwidth part, F1 and F2) excluding the frequency resource of the second uplink subband (or the second uplink subband and guard band(s)) as a flexible resource. F1 and F2 may be referred to as flexible subbands. As a result, the SBFD period may have a subband pattern 'FUF'. The terminal may receive scheduling information (e.g., dynamic scheduling information) for an uplink signal and/or a downlink signal in the flexible resource or flexible subband. By the above-described method, whether to apply a full-duplex period, whether to perform a full-duplex operation, and/or the like may be dynamically controlled by the base station. In other words, dynamic SBFD operations may be performed.

Referring again to FIG. 5, another portion of the duration of the second uplink subband (e.g., a period overlapping with the uplink period) may be considered as the uplink period. When the uplink subband is configured in an uplink symbol, the terminal may regard the uplink symbol as a full uplink symbol, and may perform an uplink transmission operation in the entire operating frequency region (e.g., uplink bandwidth part or uplink carrier) of the uplink symbol. For example, the uplink subband may not be applied or ignored in the uplink symbol.

Alternatively, the uplink subband may be valid in the uplink symbol. In the above-described exemplary embodiment, the uplink period in which the second uplink subband is configured may be considered to have a subband pattern 'UUU'. In this case, guard band(s) in the uplink period to which the second uplink subband is allocated may be considered as an uplink resource. In other words, if transmission directions of the two subbands adjacent to the guard band are all uplink, the guard band may be regarded as an uplink resource.

The above-described operations (e.g., operations that consider a resource as an uplink resource, downlink resource, or flexible resource) may also be performed at the base station. In other words, in the present disclosure, the base station may perform an operation corresponding to the operation in which the terminal considers a resource as an uplink resource, a downlink resource, or a flexible resource.

In the above-described exemplary embodiment, the frequency resource (e.g., RB set) of the first uplink subband and the frequency resource (e.g., RB set) of the second uplink subband may be the same. In other words, in (Method 100), for one carrier or one bandwidth part, the terminal may uniquely determine an RB set corresponding to an uplink subband based on RB set configuration information and/or guard band configuration information received from the base station, and determine a frequency region of the uplink subband in all SBFD periods as the RB set. In other words, the frequency location of the uplink subband may be time-invariant until the terminal receives separate valid configuration information.

The uplink subband may appear periodically and repeatedly. A periodicity of the uplink subband may have a specific relationship with a periodicity of a slot format. For example, the periodicity of the uplink subband may match the periodicity of the slot format. For another example, the periodicity of the uplink subband may be a divisor or multiple of the periodicity of the slot format. Additionally, the periodicity of the uplink subband may be a divisor or multiple of 20 ms. The periodicity may refer to a repetition periodicity. The periodicity of the uplink subband may be signaled to the terminal in an explicit manner. Additionally or alternatively, the terminal may determine the periodicity of the uplink subband based on the periodicity of the slot format according to the above-mentioned relationship. The slot format may refer to a slot format semi-statically configured to the terminal.

Meanwhile, the periodicity of the slot format may be composed of a sum of two sub-periodicities (e.g., first sub-periodicity and second sub-periodicity). For example, the first sub-periodicity may correspond to N1 consecutive slots or a time period of P1 ms, and the second sub-periodicity may correspond to N2 consecutive slots or a time period of P2 ms following the first sub-periodicity. Accordingly, the entire periodicity of the slot format may consist of (N1+N2) consecutive slots or a time period of (P1+P2) ms. Each of N1, N2, P1, and P2 may be a natural number.

In the case described above, the periodicity of the uplink subband may also be composed of a sum of two sub-periodicities (e.g., third sub-periodicity and fourth sub-periodicity). For example, the third sub-periodicity may correspond to N3 consecutive slots or a time period of P3 ms, and the fourth sub-periodicity may correspond to N4 consecutive slots or a time period of P4 ms following the third sub-periodicity. Accordingly, the entire periodicity of the uplink subband may consist of (N3 + N4) consecutive slots, or a time period of (P3 + P4) ms. Each of N3, N4, P3, and P4 may be a natural number.

For example, the third sub-periodicity and the fourth sub-periodicity may coincide with the first sub-periodicity and the second sub-periodicity, respectively. In other words, N3=N1 and N4=N2, or P3=P1 and P4=P2. For another example, the third sub-periodicity and the fourth sub-periodicity may be divisors or multiples of the first sub-periodicity and the second sub-periodicity, respectively. Alternatively, the sum of the third sub-periodicity and the fourth sub-periodicity may be a divisor or multiple of the sum of the first sub-periodicity and the second sub-periodicity. In addition, the sum of the third sub-periodicity and the fourth sub-periodicity may be a divisor or multiple of 20 ms. The third sub-periodicity and fourth sub-periodicity may be signaled to the terminal in an explicit manner. Additionally or alternatively, the terminal may determine the third sub-periodicity and the fourth sub-periodicity based on the periodicity and sub-periodicities of the slot format according to the above-described relationship.

As another method different from the above-mentioned method, even when the periodicity of the slot format is composed of a sum of two sub-periodicities (e.g., first sub-periodicity and second sub-periodicity), the periodicity of the uplink subband may be defined by one periodicity value. In this case, the periodicity of the uplink subband may be determined independently from the periodicity of the slot format. Alternatively, the periodicity of the uplink subband may have a specific relationship with the first sub-periodicity and the second sub-periodicity of the slot format. For example, the periodicity of the uplink subband may coincide with the sum of the first sub-periodicity and the second sub-periodicity. For another example, the periodicity of the uplink subband may be a divisor or multiple of the sum of the first sub-periodicity and the second sub-periodicity.

Within a single periodicity of the uplink subband, the number of transitions (or switching) from an SBFD period to a non-SBFD period and the number of transitions from a non-SBFD period to an SBFD period (or the maximum number of transitions) may be limited to T times. For example, T may be a natural number (or even number) defined in technical specifications. T may be defined as a sum of T1 and T2, and T1 and T2 may mean the number (or, the maximum number) of transitions from an SBFD period to a non-SBFD period and the number (or, the maximum number) of transitions from a non-SBFD period to an SBFD period, respectively. In an exemplary embodiment, T may be 2. In addition, T1 and T2 may be 1. The above-described operation may correspond to allowing one transition from a downlink period to an uplink period within the periodicity of the slot format. In other words, the slot format may sequentially include one downlink period, one flexible period, and one uplink period within a single periodicity.

When the periodicity of the slot format is composed of a sum of two sub-periodicities (e.g., first sub-periodicity and second sub-periodicity), a transition operation from a downlink period to an uplink period may performed once within each sub-periodicity. In other words, the slot format may sequentially include one downlink period, one flexible period, and one uplink period within each sub-periodicity. Accordingly, for the entire periodicity of the slot format, a transition operation from a downlink period to an uplink period may be performed twice, and a transition operation from an uplink period to a downlink period may also be performed twice. Meanwhile, as described above, a flexible symbol in a cell-specific slot format may be overridden to a downlink symbol or an uplink symbol by UE-specific configuration. In this case, a transition operation from a downlink period to an uplink period may be performed at most once in each slot.

Considering the above-described operations, within a single periodicity of the uplink subband, operations in which the number of transitions from an SBFD period to a non-SBFD period and from a non-SBFD period to an SBFD period exceed two times may be allowed. In other words, T>2 and T1=T2>1. Considering the complexity and delay time of the SBFD period transition operation, a method of limiting T = 4 and T1 = T2 = 2 for each periodicity of the uplink subband may be applied. Alternatively, the periodicity of the uplink subband may be composed of a sum of S sub-periodicities, and within each sub-periodicity, the transition from an SBFD period to a non-SBFD period and the transition from a non-SBFD period to an SBFD period may be allowed once, respectively. In other words, T=2S and T1=T2=S for the entire periodicity of the uplink subband.

According to the above-described method, the periodicity of the uplink subband may be longer than the periodicity or sub-periodicity of the slot format. In this case, the duration of one uplink subband may be limited to be arranged within one slot format periodicity or one slot format sub-periodicity. In this case, the duration of one uplink subband may overlap with up to one downlink period and up to one flexible period. Alternatively, a method may be considered that allows the duration of one uplink subband to be arranged across multiple slot format periodicities or multiple slot format sub-periodicities. In this case, the duration of one uplink subband may overlap with multiple downlink periods. In addition, the duration of one uplink subband may overlap with multiple flexible periods. The terminal may form an SBFD period in each overlapping period according to the method described above or a method described later. The above-described operation related to the periodicity of the uplink subband and switching between the SBFD period and the non-SBFD period may be equally applied to exemplary embodiments to be described later.

According to the above-described exemplary embodiment, the terminal performing SBFD operations may share the same slot format configuration with a terminal not performing SBFD operations (e.g., legacy terminal). The base station may transmit a broadcast message (e.g., SIB, SIB1) including common slot format information to the terminals. In this case, a signaling overhead for resource configuration of terminals may be reduced.

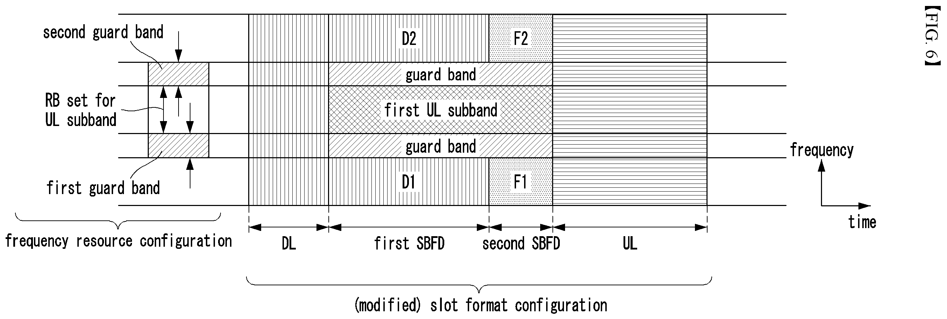

FIG. 6 is a conceptual diagram illustrating a second exemplary embodiment of a method for configuring resources in an SBFD period.

Referring to FIG. 6, a terminal may receive slot format configuration information (e.g., slot format configuration, slot format information) from a base station, and determine a downlink period, a flexible period, and/or an uplink period based on the slot format configuration information. The slot format information may include information on an SBFD period, and the terminal may determine the SBFD period based on the slot format information. In other words, the terminal may determine the downlink period, flexible period, uplink period, and/or SBFD period based on the slot format information. The SBFD period may mean a period in which an uplink subband is allocated, a period in which an uplink subband coexists with a downlink subband or flexible subband, or the like.

The SBFD period may be a set of consecutive symbol(s). The SBFD period may be distinguished from the downlink period, flexible period, and/or uplink period, and may not temporally overlap with the downlink period, flexible period, and/or uplink period. The terminal may determine frequency resources of the uplink subband and/or guard band(s) corresponding to the uplink subband based on the signaling method described above. The method applied in the above exemplary embodiment may be referred to as (Method 110).

The SBFD period may be explicitly configured to the terminal. Referring to FIG. 6, the terminal may determine a first SBFD period and a second SBFD period based on the slot format information. For example, configuration information of the first SBFD period may include information indicating a downlink transmission direction, and configuration information of the second SBFD period may include information indicating a flexible transmission direction. Based on the configuration information, the terminal may regard the first SBFD period as a period where an uplink subband and a downlink subband coexist. For example, the terminal may regard the remaining frequency region (e.g., D1 and D2) excluding the uplink subband and/or guard band(s) in the first SBFD period as a downlink region.

The terminal may regard the second SBFD period as a period in which an uplink subband and a flexible subband coexist. For example, the terminal may regard the remaining frequency region (e.g., F1 and F2) excluding the uplink subband and/or guard band(s) in the second SBFD period as a flexible region. Alternatively, the SBFD period may be configured to the terminal in form of 'modified downlink period', 'modified flexible period', or the like. For example, the first SBFD period may be configured as a downlink period including an uplink subband, a downlink period for SBFD operation, or the like, and the second SBFD period may be configured as a flexible period including an uplink subband, a flexible period for SBFD operation, or the like.

In (Method 110), the number of transitions (or switching) from an SBFD period to a non-SBFD period and the number (or the maximum number) of transitions from a non-SBFD period to an SBFD period may be defined for each slot format periodicity or each slot format sub-periodicity. For example, within each slot format periodicity, T=2 and/or T1=T2=1. Alternatively, T=2 and/or T1=T2=1 within each slot format sub-periodicity. In the latter case, an SBFD period may be arranged for each slot format sub-periodicity. The base station may appropriately configure the slot format including the SBFD period(s) so as not to exceed the number of transitions defined above.

(Method 110) may be applied only to cell-specific slot format configuration. Alternatively, (Method 110) may be applied not only to cell-specific slot format configuration but also to terminal-specific slot format configuration. In a slot format configured specifically for a terminal, a certain slot may be configured as a slot including only SBFD symbol(s). Additionally, a certain slot may be configured as a slot including both SBFD symbol(s) and non-SBFD symbol(s) (e.g., downlink symbol(s), flexible symbol(s), and/or uplink symbol(s)).

In another method different from the above-described method, the base station may configure a plurality of subbands (e.g., a plurality of RB sets) to the terminal and configure a slot format for each subband (e.g., each RB set). The method will be described below.

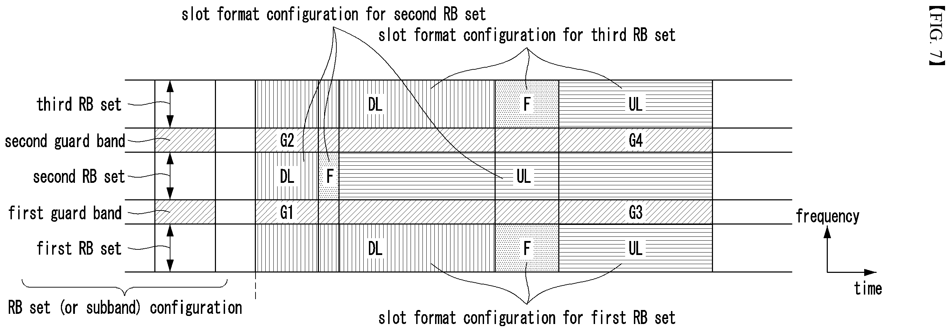

FIG. 7 is a conceptual diagram illustrating a third exemplary embodiment of a method for configuring resources in an SBFD period.

Referring to FIG. 7, a terminal may receive configuration information from a base station, and determine frequency locations of a plurality of RB sets (e.g., first RB set, second RB set, and third RB set) based on the configuration information. The terminal may determine frequency locations of guard band(s) (e.g., first guard band and second guard band) located between the RB sets based on the configuration information. The configuration information may include information on the frequency locations of the RB sets and/or information on the frequency locations of the guard band(s).

The terminal may receive slot format configuration information (e.g., slot format information, slot format configuration) for each of the configured RB sets from the base station. The slot format configuration for each RB set may be independent between the RB sets. In other words, the locations of the slot formats (e.g., downlink periods, flexible periods, and uplink periods) configured for the respective RB sets may not necessarily be aligned between the RB sets. The locations of the slot formats (e.g., downlink periods, flexible periods, and uplink periods) configured for the respective RB sets may be different. The method applied in the above exemplary embodiment may be referred to as (Method 120).

Referring to FIG. 7, the slot format of the first RB set and the slot format of the third RB set may coincide with each other. On the other hand, the slot format of the first RB set and the slot format of the second RB set may be different. For example, the downlink period of the first RB set may correspond to the downlink period, flexible period, and uplink period of the second RB set. The uplink period of the second RB set may correspond to the downlink period, flexible period, and uplink period of the first RB set. The periods having different transmission directions may overlap temporally in the RB sets, and the overlapping time period may form an SBFD period. In other words, a first period may form an SBFD period with a subband pattern 'DUD', and a second period may form an SBFD period with a subband pattern 'FUF'. Accordingly, SBFD communication may be performed between the base station and terminals.

According to (Method 120), the base station may freely arrange SBFD periods with various subband patterns in the time domain. For example, the base station may configure an SBFD period with a pattern 'DUF' (e.g., subband pattern 'DUF') to the terminal. In the SBFD period with the pattern 'DUF', a downlink subband may be allocated to the first RB set, an uplink subband may be allocated to the second RB set, and a flexible subband may be allocated to the third RB set. The above operation may be difficult to perform by (Method 100) or (Method 110).

Meanwhile, in the above exemplary embodiment, guard band(s) may be configured between the RB sets. Basically, the terminal may not perform signal transmission or reception operations in the guard band. When (Method 120) is used, there may be a time period in which a guard band is unnecessary. For example, periods G1 and G2 shown in FIG. 7 may be used for downlink transmission and downlink measurement because RB sets adjacent to the respective guard bands are all downlink resources. For example, periods G3 and G4 shown in FIG. 7 may be used for uplink transmission and uplink measurement (e.g., measurement of uplink signals transmitted from other terminals, cross-link interference measurement) because RB sets adjacent to the respective guard bands are all uplink resources. When a guard band and RB sets adjacent to the guard band in a time period have the same transmission direction (e.g., all downlink, all uplink, or all flexible), the terminal may regard the guard band as a resource having the same transmission direction in the time period. In other words, the guard band may not be used for a purpose of a guard band in the above time period. That is, in a symbol where the entire range of the frequency region (e.g., all RBs in the carrier, all RBs in the bandwidth part, and all RBs in the active bandwidth part) is configured or indicated to have the same transmission direction, the guard band may be regarded as a resource having the same transmission direction. The guard band configuration information may be ignored in the symbol.

According to the above exemplary embodiments, the SBFD period may have not only a subband pattern 'DUD', a subband pattern 'DU', and a subband pattern 'UD', but also a subband pattern 'FUF', a subband pattern 'FU', and a subband pattern 'UF'. When an SBFD period with a subband pattern 'FUF', a subband pattern 'FU', a subband pattern 'UF', or the like is configured to the terminal, the terminal may use the uplink subband to transmit an uplink control channel (e.g., periodically transmitted PUCCH, etc.) for a long duration, thereby extending the coverage of the uplink control channel, and may perform dynamic TDD operations using the flexible subband at the same time.

In the SBFD period formed by the above exemplary embodiments, the terminal may perform a downlink reception operation and an uplink transmission operation, and the base station may perform a downlink transmission operation and an uplink reception operation. The uplink subband may be configured in downlink symbol(s), and the downlink symbol(s) in which the uplink subband is configured may form an SBFD period (hereinafter referred to as 'first SBFD period'). The uplink subband may be configured in flexible symbol(s), and the flexible symbol(s) in which the uplink subband is configured may form an SBFD period (hereinafter referred to as 'second SBFD period').

The uplink subbands may be configured in uplink symbol(s). The uplink symbol(s) in which the uplink subband is configured may include only an uplink resource, and the uplink symbol(s) in which the uplink subband is configured may be regarded as uplink symbol(s). When a guard band is configured in uplink symbol(s), the guard band may be considered as an uplink resource. Alternatively, a guard band configured in uplink symbol(s) may be ignored. In the guard band, the terminal may perform an uplink transmission operation. Referring to FIG. 7, the terminal and/or the base station may regard the regions G3 and G4 as an uplink resource, and may regard symbol(s) including the regions G3 and G4 as full uplink symbol(s). Uplink signals may be transmitted in the regions G3 and G4.

In the first SBFD period and the second SBFD period, the terminal may perform an uplink signal transmission operation in the uplink subband. The terminal may not perform a downlink signal reception operation in the uplink subband. The signal transmission operation in the uplink subband may be performed within a frequency region included in the bandwidth part activated in the terminal (e.g., uplink bandwidth part). The terminal may perform a downlink signal reception operation in a frequency region (e.g., downlink subband) excluding the uplink subband and/or guard band in the first SBFD period.

The terminal may not perform an uplink signal transmission operation in the downlink subband. A signal reception operation in the downlink subband may be performed within a frequency region included in the bandwidth part activated in the terminal (e.g., downlink bandwidth part). The terminal may perform a downlink signal reception operation in a frequency region (e.g., flexible subband) excluding the uplink subband and/or guard band in the second SBFD period. The terminal may perform an uplink signal transmission operation in the flexible subband. When a downlink signal reception operation and an uplink signal transmission operation are indicated in the same symbol, the terminal may perform only one operation in the symbol according to a prioritization rule. The signal transmission or reception operation in the flexible subband may be performed within a frequency region included in the bandwidth part activated in the terminal (e.g., downlink bandwidth part or uplink bandwidth part).

When (Method 100) and (Method 110) are used, an uplink resource of the uplink subband (e.g., the first symbol of the uplink subband) may be adjacent to a downlink resource immediately before a period to which the uplink subband is allocated (e.g., the last symbol of the downlink period). In the above exemplary embodiments, a symbol immediately preceding the first uplink subband may be a downlink symbol. Therefore, the downlink symbol may be immediately followed by an uplink symbol without a flexible symbol. Since a switching time is required for the terminal to transition from a downlink operation to an uplink operation, a signal reception operation in the downlink symbol and a signal transmission operation in the uplink symbol (e.g., the uplink symbol after the downlink symbol) are indicated to the terminal, the terminal may not be able to properly perform either the reception operation or the transmission operation.

As a method to solve the above problem, a guard period or guard time may be arranged between the downlink period and the SBFD period.

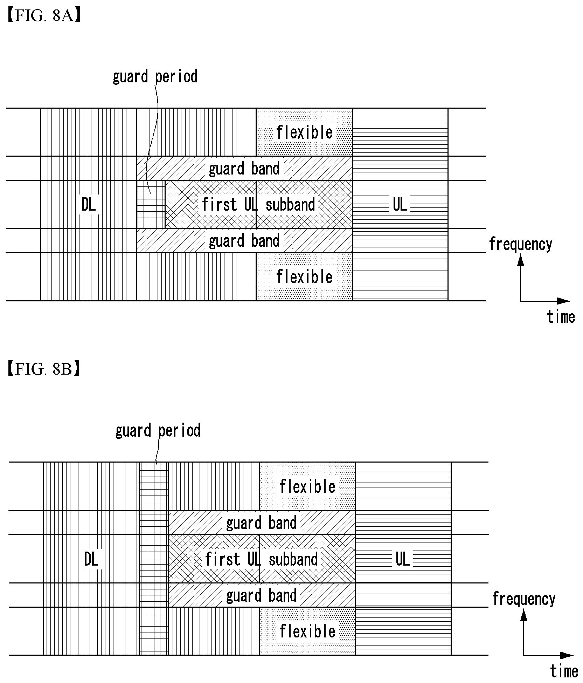

FIG. 8A is a conceptual diagram illustrating a first exemplary embodiment of a method of arranging a guard period between a downlink period and an SBFD period, and FIG. 8B is a conceptual diagram illustrating a second exemplary embodiment of a method of arranging a guard period between a downlink period and an SBFD period.

Referring to FIGS. 8A and 8B, a first uplink subband may be configured in the terminal by the method applied to the above exemplary embodiments, and a period in which the first uplink subband is configured may form an SBFD period together with downlink subband(s) or flexible subband(s). Here, a guard period may be arranged between a downlink period and the SBFD period.

According to the first exemplary embodiment of FIG. 8A, the guard period may be arranged in a start period of the first uplink subband. The guard period may include at least one symbol(s). For example, in a frequency region to which the uplink subband is allocated, at least the first symbol of the uplink subband may be designated as the guard period. When a guard band is configured, the guard period may be applied to the guard band as well. Symbol(s) forming the guard period may be referred to as guard symbol(s). Uplink signal transmission or downlink signal reception may not be scheduled to the terminal in the guard symbol of the uplink subband. The terminal may not perform a signal transmission operation or a signal reception operation in the guard symbol of the uplink subband. Due to a propagation delay of a downlink signal or an uplink timing advance (TA) indication, a downlink signal or uplink signal may actually be transmitted even in a portion of the guard period. The terminal may transmit or receive a signal in a frequency region other than the uplink subband of the guard symbol. Referring to FIG. 8A, a frequency region other than the uplink subband of the guard symbol may be configured as downlink subbands, and the terminal may receive or measure a downlink signal or an uplink transmitted by another terminal in the downlink subbands. The downlink subbands may be mapped onto a downlink bandwidth part, and the terminal may regard the downlink bandwidth part as being activated in the guard period.

According to the second exemplary embodiment of FIG. 8B, the guard period may be arranged between the downlink period and the SBFD period formed by the first uplink subband. The guard period may include at least one symbol(s). The guard period may be applied to the entire operating frequency region (e.g., bandwidth part, carrier) of the guard symbol. The guard period may be interpreted as a part of the downlink period or flexible period. Alternatively, the guard symbol may be interpreted as a symbol type that is distinct from a downlink symbol, flexible symbol, and uplink symbol. The terminal may consider that no bandwidth part is activated in the guard period or guard symbol.

The length of the guard period (e.g., the number of symbol(s) corresponding to the guard period) may be predefined in the technical specification. For example, the guard period may include only the first symbol of the uplink subband. Alternatively, the length of the guard period (e.g., the number of symbol(s) corresponding to the guard period) may be set by the base station to the terminal. Information on the length of the guard period may be transmitted to the terminal along with configuration information of the uplink subband. Alternatively, information on the length of the guard period may be included in the configuration information of the uplink subband, and the configuration information of the uplink subband may be transmitted to the terminal.

The above-described guard period may be configured to the terminal in form of a flexible period. In other words, a start portion of the uplink subband (e.g., a set of consecutive symbols including at least the first symbol) may be configured as flexible symbol(s). Alternatively, an end portion of the downlink period (e.g., a set of consecutive symbols including at least the last symbol) may be configured as flexible symbol(s). Unlike the use of conventional flexible symbols, uplink signal transmission or downlink signal reception may not be scheduled to the terminal in the flexible period configured by the above-described method. The terminal may not perform a signal transmission operation or a signal reception operation in the flexible symbol(s).

Even when the guard period or flexible period is configured within the uplink subband, a guard band adjacent to the uplink subband may still be valid even in the guard period or the flexible period, and may be used for the purpose of controlling cross-link interference. In other words, the terminal may not transmit or receive signals in the guard band in the guard period or the flexible period.

The above-described problem may occur even when an immediately preceding symbol of the uplink subband is a flexible symbol. The terminal may receive information indicating to receive a downlink signal in the flexible symbol, and may receive information indicating to transmit an uplink signal in the first symbol of the uplink subband. When a timing advance is applied to uplink transmission of the terminal, a reception time of the downlink signal and a transmission time of the uplink signal may overlap, and it may be difficult for the terminal to perform both a reception operation of the downlink signal and a transmission operation of the uplink signal. Therefore, the signal conflict problem in the process of transitioning from the flexible period to the SBFD period may be the same as the signal conflict problem in the process of transitioning from the downlink period to the SBFD period. Similarly, a guard period may be arranged between the flexible period and the SBFD period, and the method applied to the above exemplary embodiments may be applied equally. In addition, the above-described method may be equally applied even when the immediately preceding symbol of the uplink subband is an uplink symbol.

In general, the above-described method may be used to secure a predetermined time gap between the non-SBFD period and the SBFD period to assist the operation of transitioning from the non-SBFD period to the SBFD period. In addition, when transitioning from an SBFD period to a non-SBFD period, a guard period may be arranged between the SBFD period and the non-SBFD period. The non-SBFD period may be a downlink period, flexible period, or uplink period. The base station's antenna panel, subband filter, sampling rate, etc. may vary between the SBFD period and the non-SBFD period, and the base station may utilize the time gap secured by the above-described method to easily perform operations such as antenna panel switching, subband filter tuning, and sampling rate adjustment when transitioning from the SBFD period to the non-SBFD period or from the non-SBFD period to the SBFD period.

As another method for solving the problem of conflict between the downlink transmission and the uplink transmission, in a period of transitioning a downlink symbol to an uplink symbol directly without a flexible symbol between the downlink symbol and the uplink symbol, a method in which the base station avoids a conflict between the downlink transmission and uplink transmission through appropriate scheduling may be used. For example, the terminal may expect not to receive scheduling for an uplink signal in at least the first N1 symbol(s) of the uplink subband within the uplink subband. The terminal may expect not to receive scheduling for a downlink signal in N2 symbol(s) immediately preceding the uplink subband within a frequency region of the uplink subband. The above two operations may be performed independently. Alternatively, the above two operations may be performed in combination. In other words, the terminal may expect not to receive scheduling for an uplink signal in the first N1 symbol(s) of the uplink subband and scheduling for a downlink signal in the N2 symbol(s) immediately preceding the uplink subband within the frequency region corresponding to the uplink subband. Each of N1 and N2 may be a natural number. For example, N1 may be 1 and N2 may be 1.

Meanwhile, the base station may transmit SSB(s) for the terminal's initial access, beam management, radio resource measurement (RRM)/radio link monitoring (RLM), and the like. When beam sweeping is required to cell coverage extension in a high frequency band, the base station may repeatedly transmit SSB(s) in a plurality of SSB resources by using a plurality of beams. The SSB may include synchronization signals PSS, SSS, etc. The SSB may include a PBCH and a DM-RS for decoding of the PBCH. The SSB may include other downlink signals (e.g., CSI-RS) that are helpful for initial access. In the NR communication systems, the SSB may be referred to as 'SS/PBCH block'.

The base station may transmit a PDCCH in a type 0 PDCCH CSS set for initial access of the terminal. The PDCCH may include DCI, and the DCI may be DCI for scheduling a PDSCH including system information (e.g., SIB, SIB1). The PDCCH may be a PDCCH with a CRC scrambled with a specific RNTI (e.g., SI-RNTI). The DCI may have a specific DCI format (e.g., DCI format 1_0). Similarly to the SSB, the base station may repeatedly transmit a PDCCH in a plurality of resources of the type 0 PDCCH CSS set by using a plurality of beams in order to extend a signal arrival distance. The resource of the type 0 PDCCH CSS set may correspond to the CORESET 0. The type 0 PDCCH (or PDCCH DM-RS corresponding to the type 0 PDCCH) may have a QCL relationship with an SSB, and the terminal may receive the PDCCH in the type 0 PDCCH CSS set associated with the SSB based on a reception beam of the SSB.

The base station may periodically transmit the SSB and/or type 0 PDCCH. Accordingly, the SSB and type 0 PDCCH CSS set (or CORESET (e.g., CORESET 0) corresponding to the type 0 PDCCH CSS set) may not overlap with an uplink subband. To support the above operation, the uplink subband (or RB set and/or guard band(s) corresponding to the uplink subband) may be arranged in the remaining frequency region (e.g., the remaining RBs excluding RBs of the CORESET 0 in a carrier or bandwidth part) excluding a bandwidth of the resource of the type 0 PDSCCH set (e.g., bandwidth of the CORESET 0 (e.g., RBs constituting the CORESET 0)). The uplink subband (or RB set and/or guard band(s) corresponding to the uplink subband) may be arranged in the remaining frequency region (e.g., the remaining RBs excluding RBs to which the SSB is mapped in the carrier or bandwidth part) excluding a bandwidth of the SSB (e.g., RBs to which SSB is mapped).

In addition to the SSB and type 0 PDCCH, signal(s) that should be transmitted periodically may be allocated to a frequency region other than the uplink subband. The terminal may not expect the signal(s) to overlap with the uplink subband. For example, a TRS (or CSI-RS for tracking) may be periodically transmitted to the terminal for synchronization of the terminal, automatic gain control (AGC), derivation of channel characteristics, etc. Therefore, the TRS may be allocated to a frequency region other than the uplink subband. The terminal may not expect the TRS to overlap with the uplink subband.

Meanwhile, considering SBFD communication, the base station having a self-interference cancellation capability can simultaneously perform a transmission operation of the SSB or type 0 PDCCH and a reception operation of uplink signals through different subbands in the same time period. When a plurality of SSB resources are configured and there are type 0 PDCCH resources respectively corresponding to the plurality of SSB resources, the terminal may receive the SSB or type 0 PDCCH in some of the resources, and may not perform a reception operation in the remaining resources. When an SSB is not actually received in a certain SSB resource or when a type 0 PDCCH is not actually received in a certain CSS set (or PDCCH monitoring occasion), the terminal may transmit an uplink signal in a symbol to which the SSB resource or the CSS set is mapped. For example, the terminal may transmit an uplink signal in the uplink subband of the symbol to which the SSB resource or the CSS set is mapped.

For another example, the terminal may transmit an uplink signal in the entire band of the symbol to which the SSB resource or the CSS set is mapped. The entire band may include a frequency region in which the SSB resource or the CSS set (or CORESET corresponding to the CSS set) is configured. Considering the operations of the base station and the terminal, the uplink subband may overlap with the symbol to which the SSB and type 0 PDCCH CSS set are mapped. In other words, the SSB and type 0 PDCCH CSS set may be configured in the SBFD period. The symbol to which the SSB and type 0 PDCCH CSS set are mapped may be configured as an SBFD symbol.

A resource that satisfies a predetermined condition in the SSB resources and type 0 PDCCH CSS set may be configured as an SBFD symbol. For example, a symbol to which an SSB resource or type 0 PDCCH CSS set in which the terminal actually performs a reception or monitoring operation is mapped may be configured as an SBFD symbol, and the SBFD symbol may include the uplink subband. The terminal may transmit an uplink signal in the SBFD symbol. A symbol to which an SSB resource and/or Type 0 PDCCH CSS set is mapped, which does not satisfy the predetermined condition, may be restricted from being configured as an SBFD symbol. Alternatively, even when a symbol to which an SSB resource and/or type 0 PDCCH CSS set is mapped, which does not satisfy the predetermined condition, is configured as an SBFD symbol, the SBFD symbol may be regarded as a downlink symbol or a flexible symbol. In other words, the SBFD symbol configuration may be ignored in the SBFD symbol.

The terminal may receive other downlink signals in addition to the SSB in the SBFD symbol. The other downlink signals may be received in a PRB set including PRBs configured as the uplink subband. The method may be extended and applied to all SSBs and/or all type 0 PDCCH CSS sets configured in the terminal. Alternatively, the method may be applied to all SSBs actually transmitted by the base station among SSBs configured to the terminal and/or all type 0 PDCCH CSS sets actually used for transmission by the base station among type 0 PDCCH CSS sets configured to the terminal.

In the above-described operation, the SSB may be a cell-defining SSB (CD-SSB) that defines a cell. Alternatively, the SSB may be a non-cell-defining SSB (NCD-SSB) that does not define a cell. The SSB may be configured to the terminal through a PBCH (or MIB) or through a terminal-specific RRC signaling procedure. When multiple SSB resources (e.g., multiple SSBs) are arranged within one periodicity, whether or not to apply the above-described operation may be configured to the terminal for each SSB or each SSB group. Accordingly, uplink transmission of the terminal may be prohibited in a symbol in which a specific SSB or a specific SSB group is transmitted, and the specific SSB or the specific SSB group may be protected from cross-link interference.

### [Resource allocation method for an SBFD period]

The base station may simultaneously perform an uplink reception operation and a downlink transmission operation in the SBFD period. The terminal may simultaneously perform an uplink transmission operation and a downlink reception operation in the SBFD period. The terminal may be a terminal having a self-interference cancellation capability. Alternatively, the terminal may not perform an uplink transmission operation and a downlink reception operation simultaneously in the SBFD period. In other words, the terminal may not perform an uplink transmission operation and a downlink reception operation in the same time period within the SBFD period. The terminal may be a terminal that does not have a self-interference cancellation capability. The downlink reception operation may include a measurement operation based on reception of a downlink signal (e.g., RRM measurement, CSI measurement, beam quality measurement). Hereinafter, a signal transmission method for a terminal that does not perform transmission and reception operations simultaneously will be described.

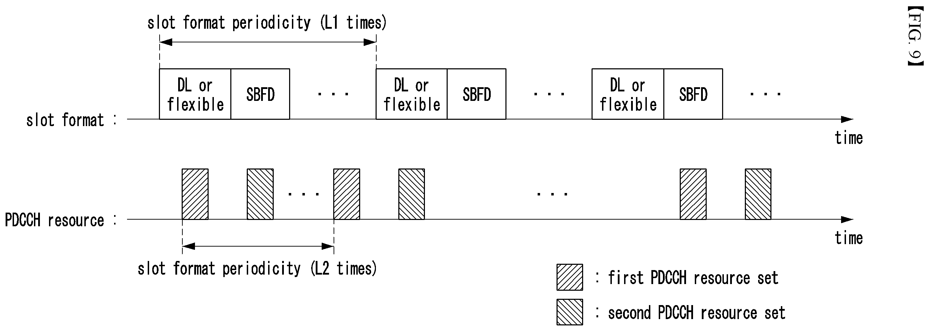

FIG. 9 is a conceptual diagram illustrating a first exemplary embodiment of slot format configuration and PDCCH monitoring resource configuration.

Referring to FIG. 9, a terminal may receive slot format configuration information and PDCCH monitoring resource configuration information from a base station. A slot format may include a downlink period (or flexible period) and an SBFD period described above. A PDCCH monitoring resource may include a first PDCCH resource set and a second PDCCH resource set. The first PDCCH resource set may be a PDCCH monitoring resource set (e.g., search space set(s), CORESET(s), PDCCH monitoring occasion(s)) configured to suit the downlink period or flexible period, and the second PDCCH resource set may be a PDCCH monitoring resource set (e.g., search space set(s), CORESET(s), PDCCH monitoring occasion(s)) configured to suit the SBFD period. The second PDCCH resource set may be configured as being confined to a downlink subband or flexible subband so as not to overlap with an uplink subband. In an exemplary embodiment, the first PDCCH resource set and the second PDCCH resource set may be assumed to have the same repetition periodicity (e.g., periodicity of CORESET or search space set).

In exemplary embodiments, when the repetition periodicity of the slot format matches to the repetition periodicity of the PDCCH monitoring resource or when the repetition periodicity of the slot format and the repetition periodicity of the PDCCH monitoring resource have an inclusion relationship with each other, the PDCCH monitoring resource of the terminal may be arranged without overlap with the uplink subband as intended by the base station for each periodicity, and the PDCCH monitoring operation of the terminal may be properly performed. The repetition periodicity of the slot format and the repetition periodicity of the PDCCH monitoring resource may not match each other. For example, the repetition periodicity of the slot format and the repetition periodicity of the PDCCH monitoring resource may not be aligned with each other.

In this case, a mismatch may occur between each period of the slot format and the PDCCH resource set corresponding to the period. For example, contrary to the base station's intention, in a certain slot format periodicity, the first PDCCH resource set may be arranged in the SBFD period rather than the downlink period or flexible period, and in another slot format periodicity, the second PDCCH resource set may be arranged in the downlink period or flexible period rather than the SBFD period. Accordingly, the search space set may overlap with the uplink subband, and at least some PDCCH candidates belonging to an overlapping region may not be used for transmission. Although a period where wideband transmission is possible is available, a CORESET may be configured in a narrow band, and as a result, PDCCH reception performance may deteriorate.

As a proposed method, a plurality of PDCCH resource sets may be configured in the terminal, and a PDCCH resource set monitored by the terminal may be switched based on a slot format and/or SBFD period (or uplink subband period). Here, the PDCCH resource set may mean a set of resource(s) on which the terminal performs PDCCH monitoring. The PDCCH resource set may refer to a set of PDCCH candidate(s) or a set of resources to which the PDCCH candidate(s) are mapped. The above-described method may be referred to as (Method 200). (Method 200) will be described in detail below.

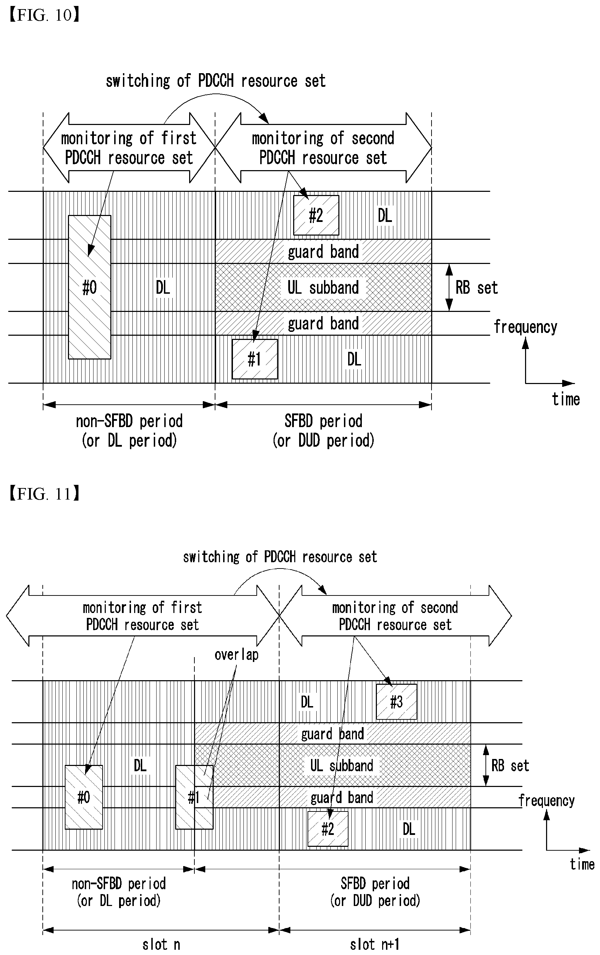

FIG. 10 is a conceptual diagram illustrating a first exemplary embodiment of a PDCCH resource set switching method based on a slot format.

Referring to FIG. 10, a terminal may receive slot format configuration information (e.g., slot format configuration, slot format information) from the base station. A slot format may be repeated periodically, and SBFD period(s) and non-SBFD period(s) may be included within one periodicity of the slot format. In the SBFD period, an uplink subband and/or guard band may be arranged, and a subband pattern 'DUD' may be formed. The non-SBFD period may refer to period(s) (e.g., set(s) of consecutive symbols) having a specific transmission direction. For example, the non-SBFD period may refer to a downlink period and/or a flexible period. An uplink period may not belong to either the SBFD period or the non-SBFD period. According to an exemplary embodiment of the present disclosure, the non-SBFD period may include set(s) of consecutive downlink symbols.

The terminal may receive configuration information of a plurality of PDCCH resource sets from the base station. For example, a plurality of PDCCH resource sets may be configured to the terminal. The plurality of PDCCH resource sets may include at least a first PDCCH resource set and a second PDCCH resource set. A PDCCH resource set may include one or more search space sets, and the PDCCH resource set may be referred to as a search space set group (SSSG). The first PDCCH resource set (e.g., first SSSG) may include a search space set #0. The search space set #0 (or CORESET corresponding to the search space set #0) may be arranged across the entire band of the carrier or bandwidth part. The second PDCCH resource set (e.g., second SSSG) may include a search space set #1 and a search space set #2. The search space sets #1 and #2 may be arranged as being confined to a downlink subband to avoid overlap with an uplink subband. In an exemplary embodiment of the present disclosure, the search space sets #0, #1, and #2 may be associated with different CORESETs.

Each PDCCH resource set may be associated with a specific period of the slot format. According to an exemplary embodiment of the present disclosure, the first PDCCH resource set may be associated with a non-SBFD period (e.g., downlink period), and the second PDCCH resource set may be associated with an SBFD period. Based on the association relationship, the terminal may monitor the first PDCCH resource set in the non-SBFD period (e.g., downlink period) and monitor the second PDCCH resource set in the SBFD period. In other words, the terminal may monitor a PDCCH resource set corresponding to each period of the slot format, and switch the PDCCH resource set according to a time when the period of the slot format is transitioned.

For example, a PDCCH monitoring resource of the terminal may be switched from the first PDCCH resource set to the second PDCCH resource set when the slot format is transitioned from the non-SBFD period (e.g., downlink period) to the SBFD period. Conversely, the PDCCH monitoring resource of the terminal may be switched from the second PDCCH resource set to the first PDCCH resource set when the slot format is transitioned from the SBFD period to the non-SBFD period (e.g., downlink period). The switching operation may be performed based on a time pattern given in advance to the terminal (e.g., a semi-static slot format and/or SBFD period (or uplink subband period)) rather than by instantaneous signaling from the base station.

The first PDCCH resource set and the second PDCCH resource set may be allocated on the same RB grid. For example, the first PDCCH resource set and the second PDCCH resource set may be allocated in a downlink bandwidth part activated for the terminal (e.g., a set of PRBs or a set of CRBs corresponding to the set of PRBs). Both a frequency region of a CORESET belonging to the first PDCCH resource set and a frequency region of a CORESET belonging to the second PDCCH resource set may be configured based on a CRB grid formed based on the same start point. The start point may be a reference frequency point (e.g., point A, the first CRB of the carrier, or the like). For example, each CRB grid may include 6 consecutive CRBs. Alternatively, the frequency region of the CORESET belonging to the first PDCCH resource set may be configured by the method described above, and the frequency region of the CORESET belonging to the second PDCCH resource set may be configured based on a CRB grid formed within a specific RB set. For example, the frequency region of the CORESET belonging to the second PDCCH resource set may be configured based on a CRB grid formed by using a start CRB of the RB set or a CRB shifted by N RB(s) from the start CRB of the RB set as a start point.

As described above, configuration information for SBFD operations (e.g., slot format information and/or uplink subband information) may be configured to the terminal in a cell-specific manner. The bandwidth part (e.g., active bandwidth part) may be configured terminal-specifically. Some bandwidth parts of the carrier bandwidth may be allocated to a certain terminal, and the some bandwidth parts may be activated. For example, in the above exemplary embodiment, a bandwidth part included in a frequency region of the uplink subband (e.g., RB set) may be configured to a first terminal. A frequency region (e.g., bandwidth part of the downlink subband) excluding the uplink subband (e.g., RB set) and/or guard band(s) may be configured to a second terminal. The bandwidth parts may include a downlink bandwidth part and/or an uplink bandwidth part. The bandwidth parts may be activated.

The terminal may receive configuration information for SBFD operations (e.g., slot format information and/or uplink subband information) from the base station by using the method described above. An SBFD period may not be formed in the bandwidth part configured (or activated) in the terminal. In the SBFD period shown in FIG. 7, the bandwidth part of the first terminal may include only the uplink subband. The bandwidth part of the second terminal may include only downlink subband(s). Even though the terminals have received the SBFD configuration information (e.g., configuration information for SBFD operations), the SBFD period may not be included in the active bandwidth parts of the terminals. In other words, time resources of the terminals may include only non-SBFD period(s).

In the above situation, the terminal may not perform the PDCCH resource set switching operation based on (Method 200). The terminal may continuously monitor the first PDCCH resource set associated with the non-SBFD period. The terminal may monitor the first PDCCH resource set even in a period where the uplink subband is configured. In other words, the operation of the terminal and/or base station corresponding to the SBFD period may or may not be performed based on the SBFD period (or whether or not the SBFD period is formed) formed on the bandwidth part rather than based on the SBFD period configured in the carrier. In other words, the SBFD operation of the terminal and/or the base station may or may not be performed depending on the association relationship (e.g., inclusion relationship) between the uplink subband and the bandwidth part activated for the terminal. The above operation may be applied equally or similarly to PUCCH resource set switching, SPS resource set switching, and CG resource set switching, which will be described later.

As another method, the terminal may still perform the PDCCH resource set switching operation based on (Method 200) on the bandwidth part. In this case, the terminal may monitor the second PDCCH resource set in a period where the uplink subband is configured, and may monitor the first PDCCH resource set in the remaining period. In other words, the first PDCCH resource set may be associated with the period in which the uplink subband is not configured, and the second PDCCH resource set may be associated with the period in which the uplink subband is configured. The terminal and/or the base station may perform the SBFD operation in the SBFD period configured based on the carrier bandwidth even when the SBFD period is not formed on the bandwidth part activated in the terminal. The above operation may be applied equally or similarly to PUCCH resource set switching, SPS resource set switching, and CG resource set switching, which will be described later.

The PDCCH resource set switching may be performed on a slot basis. In other words, the terminal may perform a switching operation from the first PDCCH resource set to the second PDCCH resource set based on a boundary point between a slot n and a slot (n+1), and monitor the first PDCCH until the last symbol of the slot n, and then monitor the second PDCCH resource set from the first symbol of the slot (n+1). When the terminal's PDCCH blind decoding (BD) operation, CCE counting operation, and/or search space set mapping operation are performed on a slot basis, the PDCCH resource set switching on a slot basis may be preferable.

On the other hand, a period type of the slot format may be transitioned in the middle of the slot. For example, the slot format may be transitioned from a non-SBFD period to an SBFD period based on one symbol within the slot n. Alternatively, the slot format may be transitioned from an SBFD period to a non-SBFD period based on one symbol within the slot n. In this case, as a proposed method, the terminal may switch the PDCCH resource set based on the first full slot of the transitioned period (e.g., transitioned SBFD period or transitioned non-SBFD period). In other words, the terminal may monitor a PDCCH resource set corresponding to the transitioned period from the first full slot of the transitioned period. This may be referred to as (Method 210). Alternatively, as a variation of (Method 210), the terminal may monitor a PDCCH resource set corresponding to the transitioned period from the first slot that satisfies a predetermined condition among full slots in the transitioned period.

According to (Method 210), a switching time between the SBFD period and the non-SBFD period may be different from a switching time between PDCCH resource sets corresponding to the period(s). In other words, the switching time between the SBFD period and the non-SBFD period may precede the switching time between the PDCCH resource sets corresponding to the period(s). Even when there is no full slot or there is not a full slot that satisfies a predetermined condition in the transitioned SBFD period or the transitioned non-SBFD period, if a partial slot to which a PDCCH resource set is to be mapped exists in the transitioned SBFD period or the transitioned non-SBFD period, the terminal may monitor the PDCCH resource set belonging to the transitioned period in the partial slot. Alternatively, when there is not full slot or there is not a full slot that satisfies the predetermined condition in the transitioned period, the terminal may not switch the PDCCH resource set and may continue to monitor the previous PDCCH monitoring set. Hereinafter, (Method 210) will be described in detail.

FIG. 11 is a conceptual diagram illustrating a second exemplary embodiment of a PDCCH resource set switching method based on a slot format.

Referring to FIG. 11, a slot format of a terminal may include a non-SBFD period (e.g., downlink period) and an SBFD period. By the above-described PDCCH monitoring set switching method, the terminal may monitor a first PDCCH monitoring set including search space sets #0 and #1 in the non-SBFD period, and may monitor a second PDCCH monitoring set including search space sets #2 and #3 in the SBFD period.

The slot format of the terminal may be transitioned from the non-SBFD period (e.g., downlink period) to the SBFD period in the middle of the slot n. According to (Method 210), the PDCCH resource set switching of the terminal may be performed on a slot basis, and the terminal may monitor the second PDCCH monitoring set from the slot (n+1), which is the first full slot of the transitioned period (e.g., SBFD period). Accordingly, the terminal may monitor the first PDCCH monitoring set until the slot n. A resource of the first PDCCH monitoring set for the non-SBFD period may include a frequency region (e.g., RB set) corresponding to an uplink subband. As shown in FIG. 11, some search space sets (e.g., search space set #1) may overlap with the uplink subband and/or guard band(s) corresponding to the uplink subband in the slot n.

In the above-described situation, the terminal may drop all PDCCH monitoring resources that overlap the uplink subband. For example, the terminal may skip the monitoring operation on a search space set (e.g., PDCCH monitoring occasion) that overlaps the uplink subband. The operation may mean an operation of not monitoring all PDCCH candidate(s) belonging to the search space set (e.g., PDCCH monitoring occasion). The base station may not transmit control information (e.g., DCI) in the search space set (e.g., PDCCH monitoring occasion) that overlaps the uplink subband. The search space set (e.g., PDCCH monitoring occasion) may be considered as being not mapped to the slot (e.g., slot n). In this case, the terminal may not include the number of PDCCH candidates and/or the number of CCEs for the search space set that is considered as being not mapped to the slot in the total number of PDCCH candidates and/or the total number of CCEs counted in the slot. Alternatively, the search space set (e.g., PDCCH monitoring occasion) may be considered as being mapped to the slot even if it is not actually monitored. In this case, the terminal may include the number of PDCCH candidates and/or the number of CCEs for the search space set that is not actually monitored in the total number of PDCCH candidates and/or the total number of CCEs counted in the slot.

As another method, the terminal may monitor a PDCCH candidate that does not overlap with an uplink subband among PDCCH candidates belonging to the PDCCH monitoring resource (e.g., search space set and/or PDCCH monitoring occasion) that overlaps with the uplink subband, and may not monitor a PDCCH candidate that overlaps with the uplink subband. The base station may transmit control information in a PDCCH candidate that does not overlap with the uplink subband, and may not transmit control information in a PDCCH candidate that overlaps the uplink subband. The PDCCH candidate that does not overlap with the uplink subband may be a PDCCH candidate that does not include even one RE that overlaps with the uplink subband. In this case, the search space set may be considered to be mapped to the slot, and the terminal may include the number of PDCCH candidates and/or CCEs for the search space set in the total number of PDCCH candidates and/or CCEs counted in the slot.

As a method different from (Method 210), the terminal may monitor a PDCCH resource set corresponding to the transitioned period from the same time (e.g., first symbol of the transitioned period) as a time when the period of the slot format is transitioned. In other words, the terminal may monitor multiple PDCCH resource sets in one slot. In the above exemplary embodiment, the terminal may monitor the first PDCCH resource set in a front part of the slot n, and monitor the second PDCCH resource set in a back part of the slot n. In this case, only search space set(s) (e.g., PDCCH monitoring occasion(s)) that completely belong to a monitoring period (e.g., SBFD period or non-SBFD period) of each PDCCH resource set may be monitored. Search space set(s) (e.g., PDCCH monitoring occasion(s)) that do not completely belong to the monitoring period (e.g., SBFD period or non-SBFD period) of each PDCCH resource set may be dropped. For example, a search space set (e.g., PDCCH monitoring occasion, PDCCH candidate) mapped to both SBFD symbol(s) and non-SBFD symbol(s) may not be monitored.

When the SBFD period and the non-SBFD period (e.g., downlink period and/or flexible period) do not include an uplink period, the uplink period may not be associated with a PDCCH resource set. Alternatively, one of a PDCCH resource set corresponding to the SBFD period and a PDCCH resource set corresponding to the non-SBFD period (e.g., downlink and/or flexible period) may be associated with an uplink period, and a monitoring period of the one PDCCH resource set may include the uplink period.

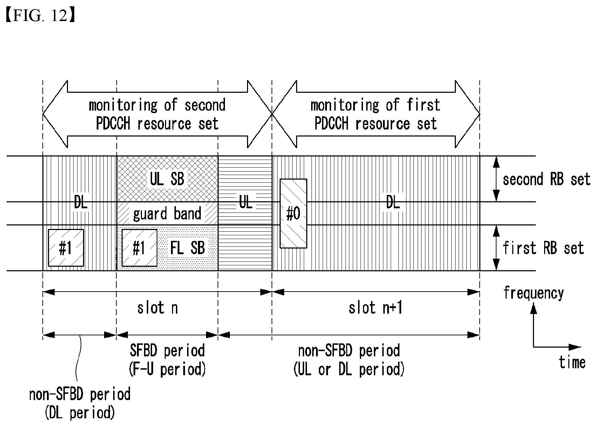

FIG. 12 is a conceptual diagram illustrating a third exemplary embodiment of a PDCCH resource set switching method based on a slot format.

Referring to FIG. 12, an SBFD period for full-duplex communication may be configured to the terminal in the slot n. In other words, the terminal may receive configuration information of the SBFD period for the slot n from the base station. The SBFD period may include an uplink subband and a flexible subband, and a guard band may be inserted between the two subbands. Each subband may correspond to an RB set. For example, the flexible subband and the uplink subband may correspond to a first RB set and a second RB set, respectively. The SBFD period may include only some symbol(s) of the slot n. In other words, the SBFD period may not include a full slot. The slot n may include a downlink period, the SBFD period, and an uplink period in that order. 'UL SB' may mean an uplink subband, and 'FL SB' may mean a flexible subband.

By the above-described method, a first PDCCH resource set for the non-SBFD period and a second PDCCH resource set for the SBFD period may be configured in the terminal. The first PDCCH resource set may include a search space set #0, and the second PDCCH resource set may include a search space set #1. The terminal may monitor the first PDCCH resource set (e.g., search space set #0) in the slot (n+1) including only the non-SBFD period. Since the slot n includes both the non-SBFD period and the SBFD period, it may be difficult to define operations of the terminal using the above-described method.

Since an available downlink transmission bandwidth of the SBFD period is narrower than an available downlink transmission bandwidth of the non-SBFD period, the PDCCH resource set corresponding to the SBFD period may be monitored not only in the SBFD period but also in the non-SBFD period. As a proposed method, the terminal may monitor a PDCCH resource set configured for SBFD symbols in a slot including M or more SBFD symbols. M may be a natural number. For example, M may be 1. The slot including at least M SBFD symbols may be a slot including both non-SBFD symbol(s) and SBFD symbol(s). Alternatively, the slot including at least M SBFD symbols may be a slot including only SBFD symbols. If a slot includes less than M SBFD symbols, the terminal may monitor the PDCCH resource set corresponding to the non-SBFD period in the slot. The above-described method may be referred to as (Method 220).

In the above exemplary embodiment, since the slot n includes SBFD symbol(s), the terminal may monitor the second PDCCH resource set (e.g., search space set #1) in all symbols of the slot n (or all symbols excluding uplink symbols). Referring to FIG. 12, the terminal may monitor the search space set #1 in the flexible subband of the SBFD period of the slot n. In addition to the above operation, since the flexible subband is a subset of the bandwidth part, the terminal may monitor the search space set #1 even in the downlink period of the slot n. Therefore, even when a search space set is not arranged in the SBFD period, the terminal may monitor the second PDCCH resource set in the downlink period or flexible period of the same slot. According to the above-described method, the terminal may monitor one PDCCH resource set in the entire period of one slot, and the PDCCH resource set switching may still be performed on a slot basis.

In (Method 220), a value of M may be determined to be large enough to allow the terminal to perform the PDCCH monitoring operation in the SBFD period. Therefore, the value of M may be related to a duration of a CORESET belonging to the second PDCCH resource set. For example, if the CORESET belonging to the second PDCCH resource set includes L symbols, M may have a value of L or more. L may be a natural number. When the second PDCCH resource set includes a plurality of CORESETs, M may be equal to or greater than the greatest value among durations of the plurality of CORESETs. Alternatively, M may be greater than or equal to the smallest value among the durations of the plurality of CORESETs. Alternatively, the value of M may have a value that is not smaller than the maximum value of duration that each of the plurality of CORESETs can have. In the NR communication system, since a CORESET may be configured to have 1, 2, or 3 symbols, M may be determined as a value equal to or greater than 3. The value of M may be signaled to the terminal by the base station. Alternatively, the value of M may be shared between the base station and the terminal by being defined in the technical specifications.

Contrary to (Method 220), a higher priority may be applied to the non-SBFD period in the slot n, and a method in which the terminal monitors the first PDCCH resource set (e.g., search space set #0) corresponding to the non-SBFD period may be considered. This method may be referred to as (Method 221). A condition for using (Method 221) may be the above-described 'M or more SBFD symbols'. Alternatively, a condition in which a slot includes N or more non-SBFD symbols (e.g., downlink symbols and/or flexible symbols) may be considered as a condition for using (Method 221). However, according to the above method, the search space set #0 may be monitored in downlink symbols, but may not be monitored in SBFD symbols. Therefore, the terminal's PDCCH monitoring opportunity may be reduced. Alternatively, a method of selectively applying the two methods described above may be considered. In other words, a PDCCH resource set monitored by the terminal may be determined by (Method 220) under a first condition and by (Method 221) under a second condition.

When the above-described PDCCH resource set switching (or SSSG switching) operation is performed, the PDCCH resource set monitored by the terminal in the uplink slot may be maintained. In other words, the PDCCH resource set monitored by the terminal may remain the same as a slot immediately before the uplink slot. The uplink slot may be a slot including only uplink symbols. Even when a slot includes symbols other than uplink symbols, if the slot has a configuration that makes it difficult for the terminal to perform the PDCCH monitoring operation thereon may be regarded as an uplink slot, and the PDCCH resource set may be maintained in the slot.

In the above exemplary embodiment, the search space sets configured in the terminal may have different frequency ranges. In the first exemplary embodiment, the search space set #0 may span all RB sets, and the search space set #1 and search space set #2 may be included in the first RB set and the third RB set, respectively. The search space sets with different frequency ranges may correspond to different CORESETs. The search space sets #0, #1, and #2 may be associated with the first CORESET, the second CORESET, and the third CORESET, respectively.

In a multi-TRP transmission scenario, different TCIs or TCI states may be applied to multiple search space sets. In other words, a plurality of search space sets may be associated with different CORESETs to which different TCIs are applied, respectively. In the second exemplary embodiment, the search space set #0 and search space set #1 in the non-SBFD period may correspond to different TRPs, and may be associated with the first CORESET and the second CORESET having different TCIs, respectively. In the SBFD period, the search space set #2 and search space set #3 may correspond to different TRPs and may be associated with the third CORESET and the fourth CORESET having different TCIs, respectively.

Meanwhile, the number of CORESETs configurable to a terminal within one carrier or one bandwidth part may be limited. For example, within a carrier or bandwidth part, up to three CORESETs may be configured to the terminal. Considering the above-mentioned constraints, in the first exemplary embodiment, three CORESETs may be configured in the same bandwidth part. In the second exemplary embodiment, it may be difficult for four CORESETs to be configured in the same bandwidth part. In other words, it may be difficult to support multiple TRP transmission for the terminal performing SBFD operations.

As a method to solve the above-described problem, the maximum number of CORESETs configurable to a terminal within one carrier or one bandwidth part may be increased. For example, up to N1 CORESETs may be configured in a carrier for which SBFD operation is not configured, and up to N2 CORESETs may be configured in a carrier for which SBFD operation is configured. Each of N1 and N2 may be a natural number, and N2 may be greater than N1. For another example, up to N1 CORESETs may be configured in a bandwidth part for which SBFD operation is not configured, and up to N2 CORESETs may be configured in a bandwidth part for which SBFD operation is configured. The bandwidth parts may belong to the same carrier. For example, N2=2×N1. For another example, N2=N1+2. N1 may be 3. The maximum number of configurable CORESETs may be defined for each of SBFD period and non-SBFD period. For example, up to N1 CORESETs may be configured to the terminal for each of SBFD period and non-SBFD period. Each of the CORESETs may be arranged in an independent frequency region. A TCI or TCI state for each of the CORESETs may be configured independently.

Among the CORESETs, a CORESET corresponding to the non-SBFD period and a CORESET corresponding to the SBFD period may form a pair. For example, in the second exemplary embodiment, the first CORESET of the non-SBFD period and the third CORESET of the SBFD period may form a first CORESET pair. The second CORESET of the non-SBFD period and the fourth CORESET of the SBFD period may form a second CORESET pair. Each CORESET pair may include search space set(s). For example, the first CORESET pair may include the search space set #0 and search space set #1. Each search space set may be associated with one CORESET forming a CORESET pair. The search space set #0 and search space set #1 may be associated with the first CORESET and the third CORESET, respectively. Alternatively, each search space set may be associated with all of a plurality of CORESETs.

The above-described PDCCH resource set switching operation may be performed based on a plurality of CORESETs within each CORESET pair. For the first CORESET pair, the terminal may monitor the first CORESET (or search space sets and/or PDCCH candidates corresponding to the first CORESET) in the non-SBFD period, and may monitor the second CORESET (or search space sets and/or PDCCH candidates corresponding to the second CORESET) in the SBFD period.

The same TCI or the same TCI state may be applied to multiple CORESETs constituting a CORESET pair. In other words, a TCI may be configured for a CORESET pair, and the configured TCI may be applied to all CORESETs constituting the CORESET pair. Accordingly, even if the maximum number of CORESETs configurable to the terminal for each bandwidth part increases, the number of TCIs managed by the terminal may be maintained and the complexity of the terminal receiver may not increase.

As another method, one CORESET may include a plurality of frequency domain occasions (or occasions), and each frequency domain occasion may be associated with search space set(s). In the second exemplary embodiment, four search space sets may be associated with two CORESETs. For example, the first CORESET may include a first frequency domain occasion and a second frequency domain occasion. The first frequency domain occasion and the second frequency domain occasion may correspond to a non-SBFD period and an SBFD period (or an SBFD period and a non-SBFD period), respectively. In the above exemplary embodiment, the first frequency domain occasion may be associated with the search space set #0, and a frequency region of the search space set #0 may be determined by the first frequency domain occasion. The second frequency domain occasion may be associated with the search space set #2, and a frequency region of the search space set #2 may be determined by the second frequency domain occasion.

The first frequency domain occasion and the second frequency domain occasion may correspond to the above-described first PDCCH resource set and second PDCCH resource set, respectively. The second CORESET may include a third frequency domain occasion and a fourth frequency domain occasion, and by the above-described method, the third frequency domain occasion and the fourth frequency domain occasion may be associated with the search space set #1 and the search space set #3, respectively. The third frequency domain occasion and the fourth frequency domain occasion may correspond to the above-described first PDCCH resource set and second PDCCH resource set, respectively. Referring to FIG. 11, the frequency region of the first frequency domain occasion and the frequency region of the third frequency domain occasion may coincide.

The above-described PDCCH resource set switching operation may be performed based on a plurality of frequency domain occasions within each CORESET. For the first CORESET, the terminal may monitor the first frequency domain occasion (or search space sets and/or PDCCH candidates corresponding to the first frequency domain occasion) in the non-SBFD period, and may monitor the second frequency domain occasion (or search space sets and/or PDCCH candidates corresponding to the second frequency domain occasion) in the SBFD period. The same TCI or the same TCI state may be applied to multiple frequency domain occasions constituting the CORESET. In other words, a TCI may be configured for a CORESET, and the configured TCI may be commonly applied to all frequency domain occasions constituting the CORESET and search space sets corresponding to the CORESET. According to the above-described method, the switching operation of the PDCCH resource sets of the terminal for SBFD operations may be performed without increasing the number of CORESETs configured in the terminal. In other words, a CORESET including multiple frequency domain occasions may be counted as one CORESET, at least from the perspective of the capability of the terminal, like a conventional CORESET (e.g., a CORESET with one common frequency region).

As described above, a plurality of frequency domain occasions may be associated with one CORESET. The association relationship may be configured through a signaling procedure from the base station to the terminal. For example, PDCCH resource configuration information may include information on the association relationship, and the information on the association relationship may be a part of CORESET configuration information or search space set configuration information. The plurality of frequency domain occasions may occupy different PRBs in the bandwidth part. Information on an RB set constituting each frequency domain occasion may be additionally included in the PDCCH resource configuration information. For example, each frequency domain occasion may be allocated in a basic unit of 6 PRBs (or 6 CRBs corresponding to 6 PRBs).

In the SBFD period, a frequency location of the frequency domain occasion may be determined based on the first RB of a subband (e.g., uplink subband, downlink subband, flexible subband) or the first RB of an RB set corresponding to the subband. In the non-SBFD period, a frequency location of the frequency domain occasion may be determined based on the first RB of the carrier or the first RB of the bandwidth part. In other words, a reference frequency point (e.g., reference RB) for determining the frequency location of the frequency domain occasion may be determined based on whether the frequency domain occasion is applied to SBFD symbol(s). The terminal may receive information indicating a period (e.g., SBFD period or non-SBFD period) to which each frequency domain occasion is applied from the base station. For example, the above information may be included in PDCCH resource configuration information. The PDCCH resource configuration information may be transmitted to the terminal based on RRC signaling, MAC CE, and/or DCI.

In the above-described method, a relationship between a frequency region of a CORESET and the frequency domain occasion may be defined.

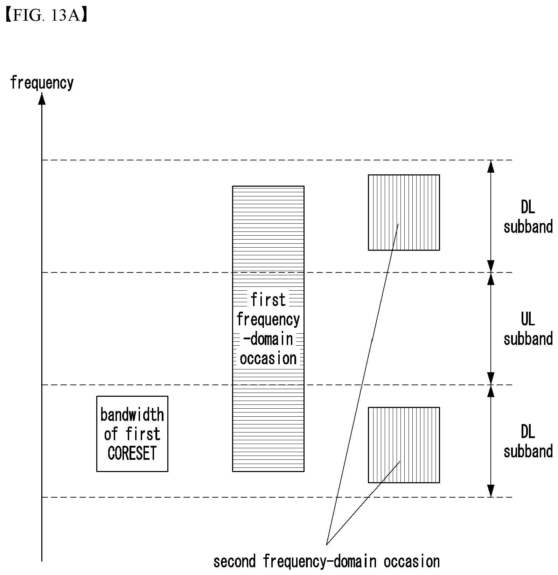

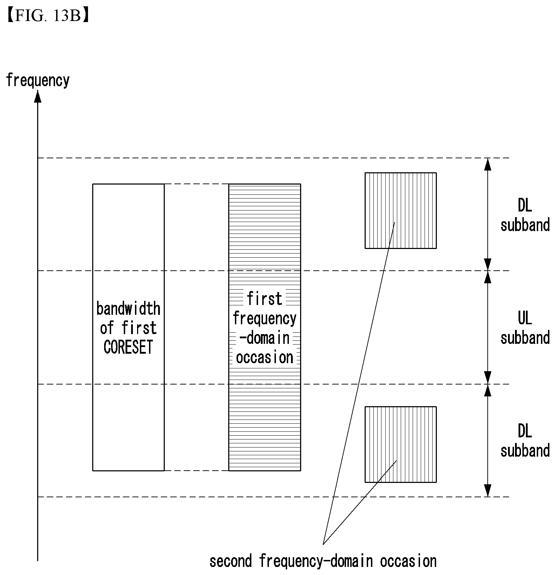

FIG. 13A is a conceptual diagram illustrating a first exemplary embodiment of a method for arranging frequency domain occasions associated with a CORESET, and FIG. 13B is a conceptual diagram illustrating a second exemplary embodiment of a method for arranging frequency domain occasions associated with a CORESET.

Referring to FIGS. 13A and 13B, a first CORESET, a first frequency domain occasion associated with the first CORESET, and a second frequency domain occasion associated with the first CORESET may be configured in the terminal. In other words, the terminal may receive, from the base station, configuration information of the first CORESET, configuration information of the first frequency domain occasion associated with the first CORESET, and configuration information of the second frequency domain occasion associated with the first CORESET. By the above-described method, the terminal may form a search space set based on the first frequency domain occasion, and monitor PDCCH candidates on the formed search space set in the non-SBFD period. The terminal may form a search space set based on the second frequency domain occasion, and monitor PDCCH candidates on the formed search space set in the SBFD period. The base station may transmit control information on one or more PDCCH candidates among the PDCCH candidates.

According to the first exemplary embodiment of FIG. 13A, a frequency region of the first frequency domain occasion and a frequency region of the second frequency domain occasion may be different from a frequency region of the first CORESET. A search space set based on the first frequency domain occasion may be arranged in the frequency region of the first frequency domain occasion regardless of the frequency region of the first CORESET. A search space set based on the second frequency domain occasion may be arranged in the frequency region of the second frequency domain occasion regardless of the frequency region of the first CORESET. Frequency resource allocation information of the first CORESET may be overridden by configuration information of the frequency region of each frequency domain occasion.

According to the second exemplary embodiment of FIG. 13B, frequency region(s) of some frequency domain occasions associated with the first CORESET may coincide with the frequency region of the first CORESET. For example, the frequency region of the first frequency domain occasion may match the frequency region of the first CORESET. The frequency region of the second frequency domain occasion may be different from the frequency region of the first CORESET. Configuration information of the frequency region of the first CORESET may be included in the CORESET configuration information, and the CORESET configuration information may be transmitted to the terminal. In this case, configuration information of the frequency region of the first frequency domain occasion may not be separately transmitted to the terminal, and the PDCCH resource configuration information may include only configuration information of the frequency region of the second frequency domain occasion. The frequency region of the first CORESET may coincide with a frequency region of a frequency domain occasion applied to the non-SBFD period among frequency domain occasions associated with the first CORESET. Alternatively, the frequency region of the first CORESET may coincide with a frequency region of a frequency domain application (e.g., second frequency domain occasion) applied to the SBFD period among frequency domain occasions associated with the first CORESET.

In another exemplary embodiment, frequency region(s) of at least some frequency domain occasion(s) associated with the first CORESET may be determined based on a frequency resource of the first CORESET. In this case, the frequency region of the frequency domain occasion and the frequency region of the first CORESET may not necessarily need to match. For example, at least part of the frequency region of the frequency domain occasion may be expressed by a frequency offset from a start RB of the first CORESET and may be configured to the terminal. Additionally or alternatively, at least part of the frequency region of the frequency domain occasion may be determined as a region obtained by shifting the frequency region of the first CORESET by X RBs. X may be a natural number.

Referring to FIGS. 13A and 13B, the frequency domain occasion may be composed of a plurality of frequency clusters. Each frequency cluster may be a set of consecutive RBs, and a plurality of frequency clusters may be discontinuous with each other. Each frequency cluster may be included in one subband (e.g., downlink subband, flexible subband). In addition, each frequency cluster may not include even one RB belonging to an uplink subband. Each frequency cluster may not include even one RB that serves as a guard band. PDCCH candidates belonging to the search space set formed based on the frequency domain occasion may be distributed and mapped to a plurality of frequency clusters. For example, the PDCCH candidate may include both CCEs belonging to a first frequency cluster and CCEs belonging to a second frequency cluster. Alternatively, each PDCCH candidate may be mapped within one frequency cluster, and the terminal may perform a PDCCH monitoring operation for each frequency cluster.

One search space set may be associated with a plurality of frequency domain occasions. For example, a first search space set belonging to the first CORESET may be associated with a first frequency domain occasion and a second frequency domain occasion associated with the first CORESET. The first frequency domain occasion may be monitored in the non-SBFD period, and the second frequency domain occasion may be monitored in the SBFD period. In this case, in the non-SBFD period, the terminal may consider that the first search space set is mapped to a frequency region corresponding to the first frequency domain occasion. In the SBFD period, the terminal may consider that the first search space set is mapped to a frequency region corresponding to the second frequency domain occasion.

Other characteristics (e.g., time resource arrangement, monitoring periodicity, slot offset, CCE aggregation level, number of PDCCH candidates, CCE-REG mapping, application of interleaving, application of wideband, TCI, etc.) of the first search space set and the first CORESET in addition the frequency region may be assumed by the terminal to be the same regardless of which period the first search space set is applied to, and the terminal may perform a PDCCH monitoring operation corresponding to the first search space set.

As another method, different search space sets may be associated with a plurality of frequency domain occasions, respectively. For example, a first search space set and a second search space set belonging to a first CORESET may be respectively associated with a first frequency domain occasion and a second frequency domain occasion associated with the first CORESET. The first search space set may be mapped to a frequency region corresponding to the first frequency domain occasion and may be monitored in the non-SBFD period. The second search space set may be mapped to a frequency region corresponding to the second frequency domain occasion and may be monitored in the SBFD period. The first search space set and the second search space set may share the characteristics of the first CORESET, but in addition to the above characteristics, characteristics (e.g., time resource arrangement, monitoring periodicity, slot offset, etc. ) based on the search space set configuration information may be configured independently in the first search space set and the second search space set.

The above-described operation may be applied only to some of CORESETs configured in the terminal. For example, the above-described operation may be applied to the remaining CORESETs except the CORESET 0. Additionally or alternatively, whether or not to apply the above-described operation may be configured by the base station to the terminal for each CORESET or each CORESET pair. Among the above-described methods, the method based on a CORESET pair may also be applied to the CORESET 0. The CORESET 0 may form a CORESET pair with another CORESET. The CORESET 0 may be configured to be monitored in either the non-SBFD period or the SBFD period. Alternatively, a period to which the CORESET 0 is applied may be predefined in the technical specifications. For example, the CORESET 0 may be associated with a non-SBFD period and may be monitored in the non-SBFD period.

Among the above-described methods, the method based on multiple frequency domain occasions may also be applied to the CORESET 0. For example, a first frequency domain occasion and a second frequency domain occasion may be associated with the CORESET 0. A frequency region of one of the frequency domain occasions may coincide with a frequency region of the CORESET 0. For example, the first frequency domain occasion to be applied to the non-SBFD period may coincide with the frequency region of the CORESET 0. In addition, the frequency region that the CORESET 0 can have may be limited. For example, the CORESET 0 may not overlap with a frequency region corresponding to an uplink subband. The CORESET 0 may be arranged as being confined to a downlink subband or flexible subband.

The above-described PDCCH resource set switching operation may be defined based on the capability of the terminal. The terminal may transmit a capability signaling message including information on whether the terminal supports the PDCCH resource set switching operation to the base station. The base station may configure or indicate the terminal to perform the above-described PDCCH resource set switching operation based on the capability signaling message.

A PDCCH may be repeatedly transmitted by multiple TRPs. A first search space set and a second search space set may be configured in the terminal, and the first search space set and the second search space set may be linked to each other for repeated PDCCH transmission. A first PDCCH candidate belonging to the first search space set and a second PDCCH candidate belonging to the second search space set may be linked to each other. The PDCCH may be repeatedly transmitted based on the first PDCCH candidate and the second PDCCH candidate that are linked to each other. The terminal may monitor the first PDCCH candidate and/or the second PDCCH candidate linked to each other in order to receive the repeatedly transmitted PDCCH. The first PDCCH candidate and the second PDCCH candidate linked to each other may have the same CCE aggregation level and the same PDCCH candidate index. The first search space set and the second search space set may correspond to different CORESETs, and the different CORESETs may have unique TCIs. The different CORESETs (e.g., the first search space set and the second search space set) may correspond to multiple TRP transmission. Alternatively, the first search space set and the second search space set may belong to the same CORESET. The same CORESET (e.g., the first search space set and the second search space set) may correspond to single TRP transmission.

In the second exemplary embodiment, repeated PDCCH transmission may be performed. For example, in the non-SBFD period, the search space set #0 and the search space set #1 may be linked for repeated PDCCH transmission and may correspond to the first CORESET and the second CORESET, respectively. In the SBFD period, the search space set #2 and the search space set #3 may be linked for repeated PDCCH transmission and may correspond to the third CORESET and the fourth CORESET, respectively. By the above-described method, the first CORESET and the third CORESET may form a CORESET pair and may correspond to the same TCI (e.g., first TCI) The second CORESET and the fourth CORESET may form a CORESET pair and may correspond to the same TCI (e.g., second TCI). One of the CORESETs constituting the CORESET pair may belong to SBFD symbol(s), and the other may belong to non-SBFD symbol(s). Alternatively, by another method described above, in the SBFD period, the search space set #2 and search space set #3 may correspond to the first CORESET and the second CORESET, respectively. The search space set #0 and search space set #2 may correspond to different frequency domain occasions of the first CORESET and may correspond to the same TCI (e.g., first TCI). The search space set #1 and search space set #3 may correspond to different frequency domain occasions of the second CORESET and may correspond to the same TCI (e.g., second TCI). One of the multiple frequency domain occasions (or multiple search space sets with different frequency regions) constituting the CORESET may belong to SBFD symbol(s), and the other may belong to non-SBFD symbol(s).

As a proposed method, the search space set #0 may be linked to the search space set #3, which has the same QCL relationship as the search space set #1, for repeated PDCCH transmission. The search space set #2 may be linked to the search space set #1, which has the same QCL relationship as the search space set #3, for repeated PDCCH transmission. The search space set #1 may be linked to the search space set #2, which has the same QCL relationship as search space set #0, for repeated PDCCH transmission, and the search space set #3 may be linked to the search space set #0, which has the same QCL relationship as search space set #2, for repeated PDCCH transmission. In other words, a search space set belonging to the non-SBFD period and a search space set belonging to the SBFD period may be linked to each other, and the terminal may monitor the search space set (e.g., PDCCH candidates corresponding to the search space set) belonging to the non-SBFD period and the search space set (e.g., PDCCH candidates corresponding to the search space set) belonging to the SBFD period, which are linked to each other, in order to receive repeated PDCCH transmission.

The above-described operation may be performed when a predetermined condition is satisfied. For example, in the second exemplary embodiment, switching from a non-SBFD period to a SBFD period may occur within the slot n, and the search space set #1 may overlap with an uplink subband. The terminal may skip a monitoring operation for all PDCCH candidates in the search space set #1 or skip a monitoring operation for at least PDCCH candidates that overlap with an uplink subband among PDCCH candidates constituting the search space set #1. In this case, in order to monitor a repeatedly transmitted PDCCH, the terminal may monitor the search space set #3, which has the same QCL relationship as the search space set #1, instead of the search space set #1. For example, the search space set #0 and the search space set #3 may be linked to each other, and the terminal may assume that a PDCCH is repeatedly transmitted in a PDCCH candidate pair corresponding to the search space set #0 and the search space set #3. According to the above-described method, repeated PDCCH transmission may be performed in a plurality of slots. The repeated PDCCH transmission may be performed in a period including both a non-SBFD period and an SBFD period. Alternatively, the terminal may skip monitoring of the search space set #1 as well as the search space set #0, and may monitor the search space set #2 and the search space set #3, which are linked to each other, to receive repeated PDCCH transmissions. In other words, the search space set #0 and search space set #1 may be replaced by the search space set #2 and search space set #3, respectively.

As another method, all of the search space sets or PDCCH candidates linked for repeated PDCCH transmission may be mapped only to SBFD symbol(s). Alternatively, all of the search space sets or PDCCH candidates linked for repeated PDCCH transmission may be mapped only to non-SBFD symbol(s). The terminal may not expect that the search space sets linked for repeated PDCCH transmission or PDCCH candidates linked for repeated PDCCH transmission are mapped to both SBFD symbol(s) and non-SBFD symbol(s). When the search space sets linked for repeated PDCCH transmission or PDCCH candidates linked for repeated PDCCH transmission are mapped to both SBFD symbol(s) and non-SBFD symbol(s), the terminal may skip at least some PDCCH monitoring operations.

For example, the terminal may monitor neither the search space sets linked for repeated PDCCH transmission nor PDCCH candidates linked for repeated PDCCH transmission. For another example, the terminal may monitor either the search space sets linked for repeated PDCCH transmission or PDCCH candidates linked for repeated PDCCH transmission. For example, a target of the monitoring may be 'one search space set or one PDCCH candidate that is temporally ahead', 'one search space set or one PDCCH candidate that is temporally late', 'one search space set with a low search space set ID', 'one search space set with a high search space set ID', 'one search space set or one PDCCH candidate belonging to an SBFD period', or 'one search space set or one PDCCH candidate belonging to a non-SBFD period'.

The above-described method may be performed regardless of the type of search space set. In other words, the above-described method may be equally applied to a CSS set and a USS set. Alternatively, the above-described method may be applied differently for each search space set type. For example, the above-described PDCCH resource set switching method may be applied only to a USS set. CORESETs forming a CORESET pair or a plurality of frequency domain occasions constituting a CORESET (or a plurality of search space sets having different frequency regions) may include only USS set(s). When switching from an SBFD period to a non-SBFD period or when switching from a non-SBFD period to an SBFD period, the terminal may monitor a CSS set without changing a frequency region of the CSS set.

The above-described PDCCH resource set switching method may be implemented in the same or similar manner for uplink transmission.

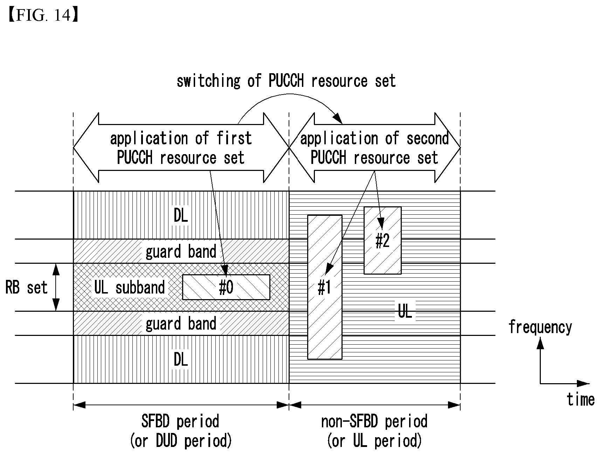

FIG. 14 is a conceptual diagram illustrating a first exemplary embodiment of a PUCCH resource set switching method based on a slot format.

Referring to FIG. 14, a base station may configure a slot format including an SBFD period and a non-SBFD period to a terminal. The terminal may receive configuration information of the slot format from the base station. An uplink subband and/or guard band may be arranged in the SBFD period, and the uplink subband and/or guard band may coexist with a downlink resource (e.g., downlink subband). The non-SBFD period may include a set of consecutive uplink symbols.

The terminal may receive configuration information of a plurality of PUCCH resource sets from the base station. The plurality of PUCCH resource sets may include at least a first PUCCH resource set and a second PUCCH resource set. A PUCCH resource set may include one or more PUCCH resource(s). The terminal may determine one of PUCCH resource(s) constituting a PUCCH resource set based on a predefined rule and/or signaling from the base station, and may transmit a PUCCH in the determined PUCCH resource. The PUCCH may include uplink control information (UCI), and the UCI may include HARQ-ACK, SR, CSI, etc. The first PUCCH resource set may be arranged as being confined to an uplink subband to avoid overlap with a downlink subband, and the second PUCCH resource set may be arranged in a relatively wide frequency region.

Similarly to the PDCCH, each PUCCH resource set may be associated with a specific period of the slot format. According to an exemplary embodiment of the present disclosure, the first PUCCH resource set and the second PUCCH resource set may be respectively associated with an SBFD period and a non-SBFD period (e.g., uplink period). Here, the SBFD period may refer to a period in which a downlink subband is configured, and the non-SBFD period may refer to a period in which a downlink subband is not configured. Based on the association relationship, the terminal may determine a PUCCH resource using the first PUCCH resource set in the SBFD period. The terminal may transmit a PUCCH in the SBFD period (e.g., determined PUCCH resource in the SBFD period). The terminal may determine a PUCCH resource using the second PUCCH resource set in the non-SBFD period (e.g., uplink period). The terminal may transmit a PUCCH in the non-SBFD period (e.g., determined PUCCH resource in the non-SBFD period).

In other words, the terminal may perform an uplink transmission operation based on the PUCCH resource set corresponding to each period of the slot format, and may switch the PUCCH resource set according to a time when the period of the slot format is transitioned. For example, At a time when the slot format is transitioned from the non-SBFD period (e.g., uplink period) to the SBFD period, the PUCCH resource of the terminal may be switched from the second PUCCH resource set to the first PUCCH resource set. At a time when the slot format is transitioned from the SBFD period to the non-SBFD period (e.g., uplink period), the PUCCH resource of the terminal may be switched from the first PUCCH resource set to the second PUCCH resource set. The switching operation may be performed based on a time pattern (e.g., slot format configured semi-statically) given in advance to the terminal rather than based on instantaneous signaling from the base station.

The first PUCCH resource set and the second PUCCH resource set may be allocated on the same RB grid. For example, a PUCCH resource constituting the first PUCCH resource set and a PUCCH resource constituting the second PUCCH resource set may be allocated in an uplink bandwidth part (e.g., a set of PRBs) activated in the terminal. The PUCCH resource constituting the first PUCCH resource set and the PUCCH resource constituting the second PUCCH resource set may be allocated based on the same PRB indexing within the uplink bandwidth part.

A PUCCH resource set configured for a random access operation of the terminal (e.g., a PUCCH resource set configured based on broadcast information, cell common RRC message, *pucch-ResourceCommon* parameter, etc.) may be configured as the second PUCCH resource set. Meanwhile, PUCCH resources constituting the PUCCH resource set (hereinafter referred to as 'common PUCCH resource set') may be mapped onto an initial uplink bandwidth part. Therefore, depending on the location of the initial uplink bandwidth part, it may be difficult for PUCCH resources constituting the common PUCCH resource set to be completely included in the uplink subband configured for full-duplex communication. Accordingly, the common PUCCH resource set may be restricted from being used as the first PUCCH resource set. Alternatively, it may nevertheless be allowed for the common PUCCH resource set to be configured as the first PUCCH resource set, subject to appropriate implementation of the base station.

In the above-described operation, among the PUCCH resources constituting the first PUCCH resource set, PUCCH resource(s) that completely belong to the SBFD period may be considered as valid PUCCH resource(s), and PUCCH resource(s) that at least partially deviate from the SBFD period may be considered as invalid PUCCH resource(s). In addition, among the PUCCH resources constituting the second PUCCH resource set, PUCCH resource(s) that completely belong to the non-SBFD period may be considered as valid PUCCH resource(s), and PUCCH resource(s) that are at least partially deviate from the non-SBFD period may be considered as invalid PUCCH resource(s).

A PUCCH resource may be determined based on a signaling message received from the base station (e.g., PUCCH resource indicator included in DCI) and/or a location of a PDCCH resource in which scheduling DCI is transmitted. In this case, the base station may indicate the terminal to transmit a PUCCH using only valid PUCCH resource(s). The terminal may not expect an invalid PUCCH resource to be indicated for PUCCH transmission. As another method, if an invalid PUCCH resource is indicated to the terminal for PUCCH transmission, the terminal may omit a PUCCH transmission operation. Alternatively, if an invalid PUCCH resource is indicated to the terminal for PUCCH transmission, the terminal may select a PUCCH resource different from the indicated PUCCH resource within the PUCCH resource set and transmit a PUCCH in the selected PUCCH resource.

The first PUCCH resource set and the second PUCCH resource set may each include a PUCCH resource consisting of a plurality of PUCCH instances for repeated PUCCH transmission. The repeated PUCCH transmission may be performed only within an SBFD period or non-SBFD period. In other words, a PUCCH resource belonging to the first PUCCH resource set may include R1 PUCCH instances (e.g., repeated transmission resources), and all of the R1 PUCCH instances may be mapped to the SBFD period. In addition, a PUCCH resource belonging to the second PUCCH resource set may include R2 PUCCH instances, and all of the R2 PUCCH instances may be mapped to the non-SBFD period. Each of R1 and R2 may be a natural number.

When a PUCCH is transmitted repeatedly, frequency hopping may be applied between PUCCH instances. In other words, some PUCCH instance(s) may be transmitted at a first frequency location and the remaining PUCCH instance(s) may be transmitted at a second frequency location. The frequency hopping may be applied between multiple PUCCH instances within a slot. Alternatively, the frequency hopping may be applied between multiple PUCCH instances mapped to multiple slots. Since an uplink frequency resource of the SBFD period and an uplink frequency resource of the non-SBFD period are different, frequency hopping ranges of the PUCCH resource belonging to the first PUCCH resource set and the PUCCH resource belonging to the second PUCCH resource set may be different. To support the above operation, information on PRB(s) corresponding to the first frequency location (e.g., start PRB index) and information on PRB(s) corresponding to the second frequency location (e.g., starting PRB index) may be configured individually for each PUCCH resource. In addition to the frequency hopping, uplink power control, transmission beam (or uplink TCI, spatial relationship information, etc.) may be managed individually for the PUCCH resource belonging to the first PUCCH resource set and the PUCCH resource belonging to the second PUCCH resource set, and configuration parameters corresponding to each PUCCH resource set may be configured individually for each PUCCH resource. The PUCCH resource set switching operation may be performed on a slot basis. For example, the terminal may perform a switching operation from the first PUCCH resource set to the second PUCCH resource set based on a boundary point between the slot n and the slot (n+1). The first PUCCH resource set may be valid until the last symbol of the slot n, and the second PUCCH resource set may be valid from the first symbol of the slot (n+1). On the other hand, a period type of the slot format may be transitioned in the middle of the slot. For example, the slot format may be transitioned from an SBFD period to a non-SBFD period based on one symbol within the slot n. As a proposed method, the terminal may switch the PUCCH resource set based on the first full slot of the transitioned period (e.g., transitioned SBFD period or transitioned non-SBFD period). In other words, the terminal may perform a PUCCH resource determination operation and/or PUCCH transmission operation using a PUCCH resource set corresponding to the transitioned period starting from the first full slot of the transitioned period. Alternatively, the terminal may apply the PUCCH resource set corresponding to the transitioned period to uplink transmission from the first slot that satisfies a predetermined condition among full slots in the transitioned period.

When the above-described method is used, the period of the slot format in the first slot is transitioned, but a time period in which the PUCCH resource set is not switched may occur. In the time period, some PUCCH resources may overlap a downlink resource (e.g., downlink subband). The terminal may consider a PUCCH resource that overlaps a downlink resource (e.g., downlink subband) as an invalid resource, and may exclude the invalid resource from candidate resources when determining the PUCCH resource.

A certain slot may include both an SBFD period and a non-SBFD period (e.g., uplink symbol(s)). The terminal may perform a PUCCH transmission operation based on a PUCCH resource set associated with the SBFD period in the slot. As a first scheme, the PUCCH transmission operation may be performed under a predetermined condition. For example, when the slot includes M or more SBFD symbols, the first PUCCH resource set may be applied to the entire period of the slot. M may be a natural number. As a second scheme, the terminal may assign a higher priority to the non-SBFD period in the slot and perform a PUCCH transmission operation based on a PUCCH resource set associated with the non-SBFD period. The first scheme may guarantee a greater number of valid PUCCH resources than the second scheme, and PUCCH reception performance may be improved according to the first scheme.

Meanwhile, resource allocation for a data channel may be performed by dynamic scheduling, semi-static scheduling, or semi-persistent scheduling. When dynamic scheduling is used, the base station may appropriately allocate resources through DCI so that a PDSCH does not overlap with an uplink region, considering a slot format and SBFD periods of the terminal, and may appropriately allocate resources through DCI so that a PUSCH does not overlap with a downlink region. When semi-persistent scheduling is used, similarly to the exemplary embodiment shown in FIG. 9, a resource periodicity of SPS PDSCH or CG PUSCH may not match the repetition periodicity of the slot format. Alternatively, the resource periodicity of SPS PDSCH or CG PUSCH may not have an inclusion relationship with the repetition periodicity of the slot format. As a result, a problem may occur in which an SPS resource or CG resource is arranged in an unintended period of the slot format (e.g., SBFD period or non-SBFD period).

As a method to solve the above-described problem, the above-described PDCCH/PUCCH resource set switching method may be applied to SPS PDSCH and CG PUSCH in a similar manner. The terminal may receive a plurality of SPS configurations (or a plurality of CG configurations) from the base station. The SPS configuration may refer to SPS configuration information, and the CG configuration may refer to CG configuration information. Each SPS configuration (or each CG configuration) may include periodically-repeated SPS PDSCH resource(s) (or CG PUSCH resource(s)) and scheduling information for the periodically-repeated SPS PDSCH resource(s) (or CG PUSCH resource(s)). The plurality of SPS configurations (or the plurality of CG configurations) may be associated with different slot format periods, and the terminal may determine SPS PDSCH resource(s) (or CG PUSCH resource(s)) based on an SPS configuration (or CG configuration) associated with each slot format period in the each slot format, and receive (or transmit) a PDSCH (or PUSCH) in the determine resource(s). According to the above-described method, the SPS configuration or CG configuration may be switched at a time when the slot format period is transitioned to another type.

According to an exemplary embodiment, a first SPS configuration configured in the terminal may be associated with a non-SBFD period (e.g., downlink period), and a second SPS configuration configured in the terminal may be associated with an SBFD period (e.g., SBFD period having a UDU subband pattern). According to a time when the slot format is transitioned from the non-SBFD period to the SBFD period, an SPS PDSCH reception operation of the terminal may be switched from an operation based on the first SPS configuration to an operation based on the second SPS configuration. A switching time of an SPS reception resource may coincide with a switching time between the non-SBFD period and the SBFD period. Alternatively, the switching time of the SPS reception resource may be determined as a full slot after the switching time between the non-SBFD period and the SBFD period.

According to another exemplary embodiment, the first CG configuration configured in the terminal may be associated with an SBFD period (e.g., an SBFD period with a DUD subband pattern), and the second CG configuration configured in the terminal may be associated with a non-SBFD period (e.g., uplink period). According to a time when the slot format is transitioned from the SBFD period to the non-SBFD period, a CG PUSCH transmission operation of the terminal may be switched from an operation based on the first CG configuration to an operation based on the second CG configuration. A switching time of a CG transmission resource may coincide with a switching time between the non-SBFD period and the SBFD period. Alternatively, the switching time of the CG transmission resource may be determined as a full slot after the switching time between the non-SBFD period and the SBFD period.

In a slot that includes both an SBFD period and a non-SBFD period, the terminal may select either the first SPS configuration or the second SPS configuration, apply the selected SPS configuration to the entire period of the slot, and may perform an SPS PDSCH reception operation and an SPS HARQ-ACK transmission operation based on the selected SPS configuration. For example, the terminal may perform an operation based on the second SPS configuration associated with the SBFD period in the slot. In a slot that includes both an SBFD period and a non-SBFD period, the terminal may select either the first CG configuration or the second CG configuration, and apply the selected CG configuration to the entire period of the slot, and may perform a CG PUSCH transmission operation based on the selected CG configuration.

The SPS configuration may correspond to SPS occasion(s). The SPS occasion may refer to periodically repeated SPS resource(s). The terminal may receive configuration information of a first SPS occasion and a second SPS occasion, and the first SPS occasion and the second SPS occasion may be associated with a non-SBFD period and an SBFD period, respectively. The first SPS occasion and the second SPS occasion may belong to the same SPS configuration. In other words, a SPS reception resource switching operation of the terminal may be performed based on a plurality of SPS occasions within one SPS configuration. The same periodicity value may be applied to a resource repetition periodicity of the plurality of SPS occasions belonging to the same SPS configuration.

The CG configuration may correspond to CG occasion(s). The CG Occasion may refer to periodically repeated CG resource(s). The terminal may receive configuration information of a first CG occasion and a second CG occasion, and the first CG occasion and the second CG occasion may be associated with an SBFD period and a non-SBFD period, respectively. The first CG occasion and the second CG occasion may belong to the same CG configuration. In other words, a CG transmission resource switching operation of the terminal may be performed based on a plurality of CG occasions within one CG configuration. The same periodicity may be applied to a resource repetition periodicity of the plurality of CG occasions belonging to the same CG configuration.

The SPS configurations or the SPS occasions may be allocated to the same set of PRBs in the same bandwidth part (e.g., activated downlink bandwidth part). The CG configurations or the CG occasions may be allocated to the same set of PRBs in the same bandwidth part (e.g., activated uplink bandwidth part).

When dynamic scheduling is used, some scheduling-related parameters (e.g., scheduling parameters) may be applied differently to an SBFD period and a non-SBFD period. In this case, a first set and a second set for the scheduling parameters may be configured to the terminal, and the first set and the second set may be associated with the SBFD period and the non-SBFD period, respectively. Based on the above association relationship, the terminal may apply scheduling parameters corresponding to each period, and perform a transmission or reception operation of a data channel. In other words, the scheduling parameters may be switched from the first set to the second set at a time of transition between the SBFD period and the non-SBFD period. Alternatively, the scheduling parameters may be switched from the second set to the first set at a time of transition between the SBFD period and the non-SBFD period. The switching operation may be repeatedly performed. For example, the scheduling parameters may include uplink power control (e.g., PUSCH power control, PUCCH power control, SRS power control) parameters.

As another example, the scheduling parameters may include TCI indication information or TCI configuration information. Candidate TCIs (or candidate TCI states) to be applied to PDSCH reception may be configured in the terminal, and the terminal may receive information indicating to apply some TCI(s) among the configured candidate TCIs to PDSCH reception through dynamic signaling (e.g., DCI, MAC CE). Candidate TCIs (or candidate TCI states) to be applied to PUSCH transmission may be configured in the terminal, and the terminal may receive information indicating to apply some TCI(s) among the configured candidate TCIs to PUSCH transmission through dynamic signaling (e.g., DCI, MAC CE). In case of a PDSCH, the TCI may correspond to a downlink TCI, reception beam, transmission/reception beam pair, spatial reception parameter, reception spatial filter, type D QCL, and/or the like. In case of a PUSCH, the TCI may correspond to an uplink TCI, transmission beam, spatial relationship information, transmission spatial filter, and/or the like. The set of candidate TCIs may be referred to as a TCI pool.

According to an exemplary embodiment, the terminal may receive configuration information of a first TCI pool and a second TCI pool from the base station for a PDSCH reception operation (or PUSCH transmission operation). The first TCI pool and the second TCI pool may be associated with a non-SBFD period and an SBFD period, respectively. Based on the association relationship, the terminal may determine TCI(s) to be applied to reception of a PDSCH (or transmission of a PUSCH) allocated to the non-SBFD period based on the first TCI pool, and may determine TCI(s) to be applied to reception of a PDSCH (or transmission of a PUSCH) allocated to the SBFD period based on the second TCI pool. In other words, the TCI pools may be dynamically switched before and after the SBFD period.

According to the above-described method, the base station may exclude from the second TCI pool a transmission beam or a reception beam that may cause strong cross-link interference in the SBFD period. In other words, the second TCI pool may be configured conservatively considering cross-link interference. Alternatively, the second TCI pool may be configured with a small number of candidate TCIs in consideration of cross-link interference. According to an exemplary embodiment, the second TCI pool may be a subset of the first TCI pool. In other words, the second TCI pool may be composed of the remaining candidate TCIs excluding some TCI(s) among the candidate TCIs constituting the first TCI pool. Due to the inclusion relationship, a signaling overhead for configuring multiple TCI pools may be reduced.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a terminal, comprising:
receiving slot format information from a base station;
identifying a downlink (DL) period, a flexible (FL) period, and an uplink (UL) period based on the slot format information;
receiving UL subband information from the base station; and
in response to that a UL subband indicated by the UL subband information overlaps with a DL resource region within the DL period, considering the DL resource region as a UL resource region,
wherein a period in which the DL resource region overlapping with the UL subband exists is a subband full duplex (SBFD) period, and a period in which the DL resource region overlapping with the UL subband does not exist is a non-SBFD period.

2. The method according to claim 1, wherein when the UL subband overlaps with an FL resource region within the FL period, the FL resource region is considered as a UL resource region, and the SBFD period includes a period in which the DL resource region overlapping with the UL subband exists and a period in which the FL resource region overlapping with the UL subband exists.

3. The method according to claim 1, wherein a transmission direction based on the UL subband information has a higher priority than a transmission direction based on the slot format information, and the transmission direction is at least one of DL, FL, or UL.

4. The method according to claim 1, wherein the UL subband information includes time resource information and frequency resource information, the frequency resource information indicates a resource block (RB) set, and the RB set includes one or more RBs.

5. The method according to claim 1, further comprising:
receiving, from the base station, configuration information of a first physical downlink control channel (PDCCH) resource set associated with the non-SBFD period and configuration information of a second PDCCH resource set associated with the SBFD period;
performing a first monitoring operation on the first PDCCH resource set within the non-SBFD period; and
performing a second monitoring operation on the second PDCCH resource set within the SBFD period,
wherein each of the first PDCCH resource set and the second PDCCH resource set includes one or more search space sets.

6. The method according to claim 5, wherein a PDCCH resource set monitored by the terminal is switched from the first PDCCH resource set to the second PDCCH resource set at a time of transition from the non-SBFD period to the SBFD period.

7. The method according to claim 6, wherein each of the non-SBFD period and the SBFD period is configured on a slot basis or a symbol basis, and a switching operation of the PDCCH resource set is performed on a slot basis.

8. The method according to claim 1, further comprising:
receiving, from the base station, configuration information of a first PDCCH resource set associated with the non-SBFD period and configuration information of a second PDCCH resource set associated with the SBFD period;
performing a first monitoring operation on one PDCCH resource set determined according to a predefined criterion among the first PDCCH resource set and the second PDCCH resource set in a slot n including the non-SBFD period and the SBFD period; and
performing a second monitoring operation on the first PDCCH resource set in a slot n+1 including only the non-SBFD period,
wherein n is a natural number.

9. The method according to claim 8, wherein when the SBFD period includes M or more symbols in the slot n, the one PDCCH resource set is determined in the slot n as the second PDCCH resource set, and M is a natural number.

10. The method according to claim 9, wherein when a duration of a control resource set (CORESET) belonging to the second PDCCH resource set includes L symbols, M is greater than or equal to L, and L is a natural number.

11. The method according to claim 8, wherein when the non-SBFD period has a higher priority than the SBFD period, the one PDCCH resource set is determined in the slot n as the first PDCCH resource set.

12. The method according to claim 1, further comprising:
receiving, from the base station, configuration information of a CORESET, configuration information of a first frequency domain occasion associated with the CORESET, and configuration information of a second frequency domain occasion associated with the CORESET;
performing a first monitoring operation on a first search space set formed based on the first frequency domain occasion in the non-SBFD period; and
performing a second monitoring operation on a second search space set formed based on the second frequency domain occasion in the SBFD period.

13. A method of a base station, comprising:
transmitting, to a terminal, slot format information indicating a downlink (DL) period, a flexible (FL) period, and an uplink (UL) period;
transmitting UL subband information to the terminal;
in response to that a UL subband indicated by the UL subband information overlaps with a DL resource region within the DL period, considering the DL resource region as a UL resource region; and
performing communication with the terminal in a subband full duplex (SBFD) period which is a period in which the DL resource region overlapping with the UL subband exists and a non-SFBD period which is a period in which the DL resource region overlapping with the UL subband does not exist.

14. The method according to claim 13, wherein when the UL subband overlaps with an FL resource region within the FL period, the FL resource region is considered as a UL resource region, and the SBFD period includes a period in which the DL resource region overlapping with the UL subband exists and a period in which the FL resource region overlapping with the UL subband exists.

15. The method according to claim 13, further comprising:
transmitting, to the terminal, configuration information of a first physical downlink control channel (PDCCH) resource set associated with the non-SBFD period and configuration information of a second PDCCH resource set associated with the SBFD period; and
transmitting control information to the terminal in at least one of the first PDCCH resource set or the second PDCCH resource set,
wherein a first monitoring operation on the first PDCCH resource set is performed within the non-SBFD period, a second monitoring operation on the second PDCCH resource set is performed within the SBFD period, and each of the first PDCCH resource set and the second PDCCH resource set includes one or more search space sets.

16. The method according to claim 13, further comprising:
transmitting, to the terminal, configuration information of a first PDCCH resource set associated with the non-SBFD period and configuration information of a second PDCCH resource set associated with the SBFD period; and
transmitting, to the terminal, control information in one PDCCH resource set determined according to a predefined criterion among the first PDCCH resource set and the second PDCCH resource set in a slot n including the non-SBFD period and the SBFD period,
wherein n is a natural number.

17. The method according to claim 13, further comprising:
transmitting, to the terminal, configuration information of a control resource set (CORESET), configuration information of a first frequency domain occasion associated with the CORESET, and configuration information of a second frequency domain occasion associated with the CORESET; and
transmitting, to the terminal, control information in at least one of a first search space set formed based on the first frequency domain occasion in the non-SBFD period or a second search space set formed based on the second frequency domain occasion in the SBFD period.

18. A terminal comprising at least one processor,
wherein the at least one processor causes the terminal to perform:
receiving slot format information from a base station;
identifying a downlink (DL) period, a flexible (FL) period, and an uplink (UL) period based on the slot format information;
receiving UL subband information from the base station; and
in response to that a UL subband indicated by the UL subband information overlaps with a DL resource region within the DL period, considering the DL resource region as a UL resource region,
wherein a period in which the DL resource region overlapping with the UL subband exists is a subband full duplex (SBFD) period, and a period in which the DL resource region overlapping with the UL subband does not exist is a non-SBFD period.

19. The terminal according to claim 18, wherein the at least one processor further causes the terminal to perform:
receiving, from the base station, configuration information of a first physical downlink control channel (PDCCH) resource set associated with the non-SBFD period and configuration information of a second PDCCH resource set associated with the SBFD period;
performing a first monitoring operation on the first PDCCH resource set within the non-SBFD period; and
performing a second monitoring operation on the second PDCCH resource set within the SBFD period,
wherein each of the first PDCCH resource set and the second PDCCH resource set includes one or more search space sets.

20. The terminal according to claim 18, wherein the at least one processor further causes the terminal to perform:
receiving, from the base station, configuration information of a first PDCCH resource set associated with the non-SBFD period and configuration information of a second PDCCH resource set associated with the SBFD period;
performing a first monitoring operation on one PDCCH resource set determined according to a predefined criterion among the first PDCCH resource set and the second PDCCH resource set in a slot n including the non-SBFD period and the SBFD period; and
performing a second monitoring operation on the first PDCCH resource set in a slot n+1 including only the non-SBFD period,
wherein n is a natural number.
